# FASCICULE DE BREVET EUROPEEN

(11) **EP 3 592 145 B1**
(45) Date de publication et mention de la délivrance du brevet: **12.07.2023**
(21) Numéro de dépôt: 18712983.8
(22) Date de dépôt: 09.03.2018
(51) Int. Cl.: A01N 1/02

(54) **SYSTÈME ET PROCÉDÉ DE VITRIFICATION D'UNE SUBSTANCE BIOLOGIQUE**
SYSTEM UND VERFAHREN ZUR VERGLASUNG EINER BIOLOGISCHEN SUBSTANZ
SYSTEM AND METHOD FOR VITRIFYING A BIOLOGICAL SUBSTANCE

(30) Priorité: 10.03.2017 FR 1751987
(43) Date de publication de la demande: 15.01.2020
(73) Titulaire: IMV Technologies, 61300 Saint-Ouen-Sur-Iton (FR)
(72) Inventeur: SCHMITT, Eric, 53700 Villaines-la-Juhel (FR); BEAU, Christian, 78117 Toussus-le-Noble (FR); CLAIRAZ, Philippe, 92330 Sceaux (FR); DOUESNEL, Jean-Louis, 27250 Rugles (FR)
(74) Mandataire: Santarelli
(86) Numéro de dépôt international: PCT/FR2018/050547
(87) Numéro de publication internationale: WO 2018/162862

(56) Documents cités:
- WO-A1-99/09137
- DE-A1-102005 003 286
- DE-A1-102014 104 330
- US-A1- 2014 157 798
- US-S1- D 642 697

## Description

### DOMAINE DE L'INVENTION

L'invention a trait d'une manière générale à la conservation par vitrification cryogénique d'une substance comportant de la matière biologique, telle qu'un embryon ou un ovocyte.

L'invention concerne plus particulièrement les systèmes de vitrification par plongée dans un agent cryogénique liquide d'une enveloppe de conditionnement dans laquelle est préalablement introduit un volume d'une telle substance biologique.

L'invention concerne également les procédés de vitrification d'une telle substance biologique à l'aide de tels systèmes.

### ARRIERE-PLAN TECHNOLOGIQUE

Les enveloppes de conditionnement de matière biologique destinées à être plongées dans un agent cryogénique liquide font classiquement partie d'un ensemble de conditionnement comportant, en outre de l'enveloppe, un support comportant une zone de réception d'un volume de substance comportant de la matière biologique, telle qu'un embryon ou un ovocyte.

L'enveloppe comporte un tube mince ayant un diamètre interne prédéterminé, dans lequel le support est configuré pour être introduit. Le tube mince est généralement réalisé en un matériau polymère ayant la capacité d'être soudé facilement tout en assurant une bonne étanchéité. Le tube mince présente une ouverture à une première extrémité tandis qu'il présente une soudure au voisinage de l'extrémité opposée.

Un premier système de vitrification connu comporte un bac configuré pour contenir un certain volume d'azote liquide.

Pour conditionner le volume prédéterminé de substance biologique, celui-ci est préalablement déposé sur le support, puis le support est introduit dans le tube mince par son ouverture. Une soudure est ensuite réalisée au voisinage de la première extrémité du tube mince de sorte à sceller hermétiquement l'enveloppe. L'enveloppe soudée aux deux extrémités est enfin plongée complètement, c'est-à-dire immergée, dans l'azote liquide pour vitrifier la substance biologique.

Un deuxième système de vitrification connu comporte un bac, configuré également pour contenir un certain volume d'azote liquide, et un couvercle configuré pour être posé sur le bac et comportant une paroi s'étendant en surplomb de l'azote liquide. Le couvercle présente des encoches ménagées dans la paroi et chacune configurées pour maintenir le tube d'une enveloppe engagé dans l'encoche selon une orientation sensiblement verticale.

Ce deuxième système est illustré par exemple dans le « *design patent* » américain US D642,697 S.

Le conditionnement de la substance biologique s'opère de la façon suivante. Le tube mince de l'enveloppe est engagé dans l'encoche du couvercle de sorte que la portion du tube mince recevant la substance biologique à vitrifier est immergée dans l'azote liquide, tandis que la portion d'extrémité du tube mince comportant l'ouverture n'est pas immergée dans l'azote liquide et se trouve au-dessus du couvercle, dans l'air ambiant.

La substance biologique est déposée sur le support, lequel est introduit dans le tube mince par son ouverture dans l'air ambiant. Une soudure est ensuite réalisée au voisinage de la première extrémité du tube mince de sorte à sceller hermétiquement l'enveloppe. Si besoin, l'enveloppe soudée aux deux extrémités peut être plongée complètement, c'est-à-dire immergée, dans l'azote liquide pour vitrifier la substance biologique.

US 2014/0157798 A1 divulgue un système comprenant les caractéristiques du préambule de la revendication 1.

### OBJET DE L'INVENTION

L'invention vise à fournir un système de vitrification du même genre que ceux décrits ci-dessus, mais qui soit plus performant tout en étant simple et commode à utiliser.

L'invention propose à cet effet, sous un premier aspect, un système de vitrification cryogénique d'une substance comportant de la matière biologique à conserver, telle qu'un embryon ou un ovocyte, et reçue dans une enveloppe de conditionnement qui comporte un tube mince de dimensions prédéterminées présentant une ouverture à une première extrémité et obturé au voisinage d'une deuxième extrémité opposée à ladite première extrémité, ladite enveloppe faisant partie d'un ensemble de conditionnement de ladite substance comportant, en outre de ladite enveloppe, un support de réception configuré pour recevoir un volume prédéterminé de ladite substance et pour être introduit à l'intérieur dudit tube mince de sorte que ledit volume prédéterminé de ladite substance se situe dans une région de réception dudit tube mince située à distance de ladite ouverture dudit tube mince ; ledit système comportant un bac configuré pour contenir un bain d'un agent cryogénique et au moins un organe de support configuré pour maintenir ledit tube mince selon une orientation prédéterminée et pour être monté sur ledit bac dans une première position prédéterminée dans laquelle ledit tube mince est orienté debout dans ledit bac, ladite région de réception dudit tube mince est immergée dans une zone liquide dudit bain d'agent cryogénique où ledit agent cryogénique est à l'état liquide, et ladite ouverture dudit tube mince est située au-dessus dudit bain d'agent cryogénique, dans une zone d'air ambiant surmontant ledit bain d'agent cryogénique, pour permettre l'introduction dudit support de réception de ladite substance dans ledit tube mince ; ledit système étant caractérisé en ce que ledit organe de support est configuré pour être monté sur ledit bac dans au moins une deuxième position prédéterminée, plus basse que ladite première position prédéterminée, deuxième position prédéterminée dans laquelle ledit tube mince est orienté debout dans ledit bac, ladite région de réception dudit tube mince est immergée dans ladite zone liquide, et ladite ouverture dudit tube mince est située immédiatement au-dessus de ladite zone liquide, dans une zone gazeuse dudit bain d'agent cryogénique, surmontant ladite zone liquide et où ledit agent cryogénique est à l'état gazeux, et en-dessous de ladite zone d'air ambiant surmontant ledit bain d'agent cryogénique, et pour être relevé depuis ladite deuxième position prédéterminée vers ladite première position prédéterminée.

Dans le système de vitrification selon l'invention, l'organe de support est monté mobile sur le bac et permet de disposer le tube mince de l'enveloppe dans deux positions distinctes sur le bac et vis-à-vis du bain d'agent cryogénique, afin d'assurer un refroidissement particulièrement performant à la fois du tube mince et de la substance conditionnée dans le tube mince, en vue de la conservation de cette substance.

En particulier, l'organe de support est configuré d'abord pour positionner le tube mince, dépourvu de la substance, dans sa deuxième position prédéterminée dans laquelle le tube mince est entièrement en contact avec l'agent cryogénique, partiellement dans la zone liquide du bain et partiellement dans la zone gazeuse du bain.

Le tube mince est ainsi refroidi sur toute sa longueur, depuis la région de réception de la substance jusqu'à son ouverture.

Le fait que l'ouverture du tube mince est située dans la zone gazeuse du bain d'agent cryogénique permet de ne pas remplir un volume interne du tube mince (au moins partiellement dédié à la substance) avec de l'agent à l'état liquide. Au contraire, l'agent cryogénique à l'état gazeux, qui est plus froid que l'air ambiant, chasse par convection l'air ambiant hors du tube mince.

Ainsi, le tube mince est refroidi par l'agent cryogénique non seulement par le contact direct d'une face externe du tube mince avec l'agent cryogénique à l'état liquide et à l'état gazeux, mais aussi par le contact direct d'une face interne du tube mince avec l'agent cryogénique à l'état gazeux.

Alors que l'on peut considérer qu'il y a vitrification de la substance lorsque la cinétique de refroidissement a une pente dont la valeur absolue est supérieure à environ 200 °C par minute, voire 500 °C par minute, le système de vitrification selon l'invention peut permettre d'atteindre des cinétiques de refroidissement par exemple de l'ordre de 2000 à 3000 °C par minute, par exemple entre une température initiale de 10°C et une température finale de - 150°C.

Selon des caractéristiques simples, commodes et économiques du système selon l'invention :
- ledit système comporte au moins un rail de guidage mécaniquement assujetti audit bac, ledit organe de support étant monté mobile sur ledit rail de guidage selon une direction sensiblement verticale pour passer de ladite deuxième position prédéterminée à ladite première position prédéterminée, et inversement ;
- ledit organe de support comporte au moins une saillie de positionnement et ledit rail de guidage comporte une première encoche de positionnement et une deuxième encoche de positionnement configurées chacune pour recevoir ladite au moins une première saillie et définissant respectivement ladite première position prédéterminée et la deuxième position prédéterminée ;
- ledit organe de support est monté à coulissement sur ledit rail de guidage ;
- ledit organe de support comporte au moins une saillie de guidage et le rail de guidage comporte au moins une encoche de guidage s'étendant sensiblement verticalement et au moins partiellement le long dudit rail de guidage et configurée pour recevoir à coulissement ladite au moins une saillie de guidage, lorsque ledit organe de support est déplacé depuis sa deuxième position prédéterminée vers sa première position prédéterminée ;
- l'organe de support comporte un corps en forme de U présentant un fond et des ailes latérales en regard définissant ensemble un logement pour ledit tube mince de ladite enveloppe, lequel logement débouche longitudinalement à l'opposé dudit fond par une ouverture latérale configurée pour recevoir ledit tube orienté debout pour son introduction dans ledit logement ;
- ledit organe de support est pourvu, du côté d'une extrémité basse, d'au moins une pièce de coincement dudit tube mince et, du côté d'une extrémité haute opposée à son extrémité basse, d'un crochet de retenue dudit tube mince ;
- ledit organe de support est configuré de sorte que ledit tube mince est bloqué en position sur ledit organe de support et au moins partiellement fléchit longitudinalement entre ladite au moins une pièce de coincement et ledit crochet de retenue ;
- ledit système comporte un couvercle monté sur un rebord dudit bac et s'étendant en surplomb de ladite zone liquide, et ledit organe de support est monté mobile sur et au travers dudit couvercle ;
- ledit couvercle est positionné dans ladite zone gazeuse dudit bain d'agent cryogénique ;
- ledit bac est pourvu d'une paroi externe isolante et d'une paroi interne étanche délimitant au moins partiellement un espace interne de réception du bain d'agent cryogénique, ladite paroi externe isolante ayant un épaulement interne ménagé sur le haut dudit bac, ladite paroi interne étanche ayant une extension externe ménagé sur le haut dudit bac et disposé en appui sur ledit épaulement de ladite paroi externe, ladite extension externe formant ledit rebord dudit bac sur lequel est positionné ledit couvercle ;
- ledit système comporte un gobelet multi-compartiments configuré pour transporter une pluralité de dites enveloppes de conditionnement, un support de réception au moins partiellement logé dans ledit bac et configuré pour recevoir, de manière amovible, ledit gobelet multi-compartiments de sorte qu'au moins la région de réception du tube mince de chacune de ladite pluralité de dites enveloppes de conditionnement est immergée dans ladite zone liquide dudit bain d'agent cryogénique.
- ledit support de réception dudit gobelet multi-compartiments est mobile en rotation entre une position de stockage où ledit gobelet multi-compartiments se trouve sensiblement à la verticale et une position de charge/décharge où ledit gobelet multi-compartiments est incliné et immergé dans ladite zone liquide dudit bain d'agent cryogénique ; grâce à quoi ledit système est configuré pour faire passer une dite enveloppe de conditionnement obturée au niveau de chacune de ses première et deuxième extrémité au moins depuis ledit organe de support vers ledit gobelet multi-compartiments en restant en majeure partie immergée dans ledit bain d'agent cryogénique ;
- ledit système comporte un dispositif d'ouverture configuré pour découper ledit tube mince de ladite enveloppe de conditionnement, au niveau d'une desdites première et deuxième extrémités, et monté sur ledit bac à proximité dudit gobelet multi-compartiments ;
- ledit système comporte un râtelier monté sur ledit bac à proximité dudit dispositif d'ouverture et présentant une pluralité d'encoches chacune configurée pour maintenir dans une position debout un tube mince d'une dite enveloppe de conditionnement, ouvert au niveau d'une desdites première et deuxième extrémités, ledit râtelier étant configuré de sorte que la région de réception dudit tube mince est immergé dans la zone liquide dudit bain d'agent cryogénique ; et/ou
- ledit système comporte un dispositif de contrôle de niveau de ladite zone liquide dudit bain d'agent cryogénique dans ledit bac.

L'invention vise aussi, sous un second aspect, un procédé de vitrification d'une substance comportant de la matière biologique à conserver, telle qu'un embryon ou un ovocyte, notamment à l'aide du système tel que décrit ci-dessus, comportant les étapes de :
- fournir un ensemble de conditionnement de ladite substance comportant une enveloppe de conditionnement ayant un tube mince de dimensions prédéterminées présentant une ouverture à une première extrémité et obturé au voisinage d'une deuxième extrémité opposée à ladite première extrémité, et un support de réception configuré pour recevoir un volume prédéterminé de ladite substance et pour être introduit à l'intérieur dudit tube mince de sorte que ledit volume prédéterminé de ladite substance se situe dans une région de réception dudit tube mince située à distance de ladite ouverture dudit tube mince ;
- fournir un bac contenant un bain d'un agent cryogénique ;
- fournir au moins un organe de support configuré pour être monté sur ledit bac et pour maintenir ledit tube mince ;
- disposer ledit tube mince dans ledit organe de support selon une orientation prédéterminée ;
- monter ledit organe de support sur ledit bac dans au moins une deuxième position prédéterminée dans laquelle ledit tube mince est orienté debout dans ledit bac, ladite région de réception dudit tube mince étant immergée dans une zone liquide dudit bain d'agent cryogénique où l'agent cryogénique est à l'état liquide, et ladite ouverture dudit tube mince étant située immédiatement au-dessus de ladite zone liquide, dans une zone gazeuse dudit bain d'agent cryogénique, surmontant ladite zone liquide et où ledit agent cryogénique est à l'état gazeux, et en-dessous d'une zone d'air ambiant surmontant ledit bain d'agent cryogénique ;
- relever ledit organe de support depuis ladite deuxième position prédéterminée vers une première position prédéterminée, plus haute que ladite deuxième position prédéterminée, dans laquelle ledit tube mince est orienté debout dans ledit bac, ladite région de réception dudit tube mince étant immergée dans ladite zone liquide, et ladite ouverture dudit tube mince étant située au-dessus dudit bain d'agent cryogénique, dans une zone d'air ambiant surmontant ledit bain d'agent cryogénique, pour permettre l'introduction dudit support de réception de ladite substance dans ledit tube mince ;
- déposer ladite substance sur ledit support et introduire ledit support dans ledit tube mince ; et
- sceller ledit tube mince au niveau de sa deuxième extrémité.

Selon des caractéristiques simples, commodes et économiques du procédé :
- le procédé comporte en outre les étapes de fournir un gobelet multi-compartiments configuré pour transporter une pluralité de dites enveloppes de conditionnement, de monter ledit gobelet multi-compartiments de manière amovible dans une position de stockage où ledit gobelet multi-compartiments se trouve sensiblement à la verticale sur un support de réception au moins partiellement logé dans ledit bac de sorte qu'au moins la région de réception du tube mince de chacune de ladite pluralité de dites enveloppes de conditionnement est immergée dans ladite zone liquide dudit bain d'agent cryogénique, déplacer en rotation ledit gobelet multi-compartiments sur ledit support depuis ladite position de stockage vers une position de charge/décharge où ledit gobelet multi-compartiments est incliné et au moins partiellement immergé dans ladite zone liquide dudit bain d'agent cryogénique, faire passer une dite enveloppe de conditionnement obturée au niveau de chacune de ses première et deuxième extrémités au moins depuis ledit organe de support vers ledit gobelet multi-compartiments en restant en majeure partie immergée dans ledit bain d'agent cryogénique ; et/ou
- le procédé comporte en outre les étapes de fournir un dispositif d'ouverture monté sur ledit bac à proximité dudit gobelet multi-compartiments et configuré pour découper ledit tube mince de ladite enveloppe de conditionnement, au niveau d'une desdites première et deuxième extrémités, de découper ledit tube mince de ladite enveloppe de conditionnement, au niveau d'une desdites première et deuxième extrémités, de fournir un râtelier monté sur ledit bac à proximité dudit dispositif d'ouverture et présentant une pluralité d'encoches chacune configurée pour maintenir dans une position debout un tube mince d'une dite enveloppe de conditionnement, ouvert au niveau d'une desdites première et deuxième extrémités, ledit râtelier étant configuré de sorte que la région de réception dudit tube mince est immergé dans la zone liquide dudit bain d'agent cryogénique, et monter ledit tube mince découpé dans une dite encoche dudit râtelier.

### BREVE DESCRIPTION DES DESSINS

L'exposé de l'invention sera maintenant poursuivi par la description détaillée d'exemples de réalisation, donnée ci-après à titre illustratif et non limitatif, en référence aux dessins annexés. Sur ceux-ci :
- la figure 1 illustre une enveloppe de conditionnement d'une substance comportant de la matière biologique à vitrifier, ici vue en coupe longitudinale ;
- la figure 2 représente schématiquement en perspective un système de vitrification conforme à l'invention, configuré pour vitrifier la substance contenue dans l'enveloppe de conditionnement illustrée sur la figure 1, ici dans une première configuration dite de vitrification/dévitrification ;
- la figure 3 est une vue similaire à celle de la figure 2, le système de vitrification étant ici dans une deuxième configuration dite de charge/décharge.
- la figure 4 illustre le système de vitrification selon coupe repérée IV-IV sur la figure 2 ;
- les figures 5 à 7 représente schématiquement en perspective et de manière isolée, un organe de support du système de vitrification illustré sur les figures 2 à 4, pris selon différents angles de vue ;
- la figure 8 montre une variante de réalisation de l'organe de support illustré sur les figures 5 à 7, ici vue en coupe longitudinale ; et
- la figure 9 représente schématiquement et partiellement, en vue de dessus le système de vitrification illustré sur les figures 2 à 4 ;
- les figures 10 à 13 sont des vues en coupe repérées respectivement X-X, XI-XI, XII-XII et XIII-XIII sur la figure 9.

### DESCRIPTION DETAILLEE D'EXEMPLES DE REALISATION

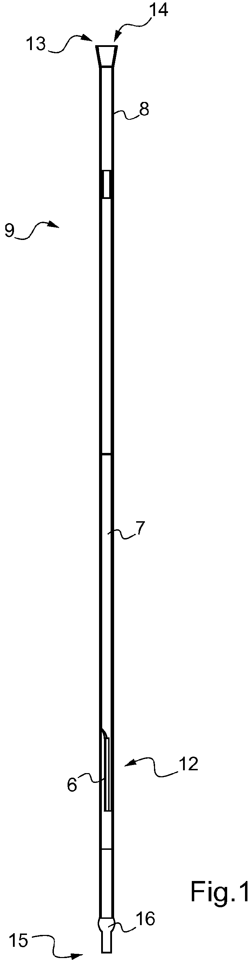

La figure 1 illustre un ensemble de conditionnement qui comporte une enveloppe de conditionnement d'une substance comportant de la matière biologique à conserver par vitrification cryogénique, et un support de réception de la substance configuré pour être introduit dans cette enveloppe.

La matière biologique que comporte la substance est par exemple un embryon ou un ovocyte que l'on souhaite stocker et conserver.

La substance à vitrifier comporte ici, en outre de la matière biologique, un agent cryo-protecteur auquel la matière biologique est préalablement mélangée. L'agent cryo-protecteur permet d'éviter la détérioration de la matière biologique pendant la cryogénisation, notamment par formation de cristaux de glace.

L'enveloppe de conditionnement est ici une paillette de vitrification 9 configurée pour être plongée dans un bain d'agent cryogénique, par exemple de l'azote liquide, après qu'un certain volume de cette substance ait été introduit dans la paillette 9.

L'agent cryogénique liquide est ici de l'azote liquide.

La paillette 9 comporte un tube mince 8 de dimensions prédéterminées. Le tube mince 8 présente en particulier un diamètre externe, un diamètre interne et une longueur prédéterminés. Le tube mince 8 présente une ouverture 14 à une première extrémité 13 et, au voisinage d'une deuxième extrémité 15 opposée à la première extrémité 13, une soudure 16 obturant le tube mince 8.

Le tube mince 8 est ici en matériau polymère choisi par exemple parmi les résines ionomères pour leur bonne tenue mécanique, leur comportement au froid et leur capacité à être soudées facilement tout en assurant une bonne étanchéité.

Le support de réception comporte ici un jonc 7 présentant une portion d'extrémité formant une gouttière 6 configurée pour recevoir un volume prédéterminé de la substance à vitrifier.

Le jonc 7 est configuré pour être introduit dans le tube mince 8 de la paillette 9 de sorte à occuper une position prédéterminée dans laquelle la gouttière 6, et par conséquent le volume de substance reçu dans la gouttière 6, se situe dans une région de réception 12 du tube mince 8 située à distance de son ouverture 14.

La région de réception 12 se situe entre l'ouverture 14 et la soudure 16, ici à proximité de la deuxième extrémité 15 du tube 8.

On notera que sur la figure 1, où l'ensemble de la paillette 9 est montrée dans une position verticale, l'ouverture 14 se situe au niveau haut de la paillette 9 tandis que la région de réception 12 se situe au niveau bas de la paillette 9.

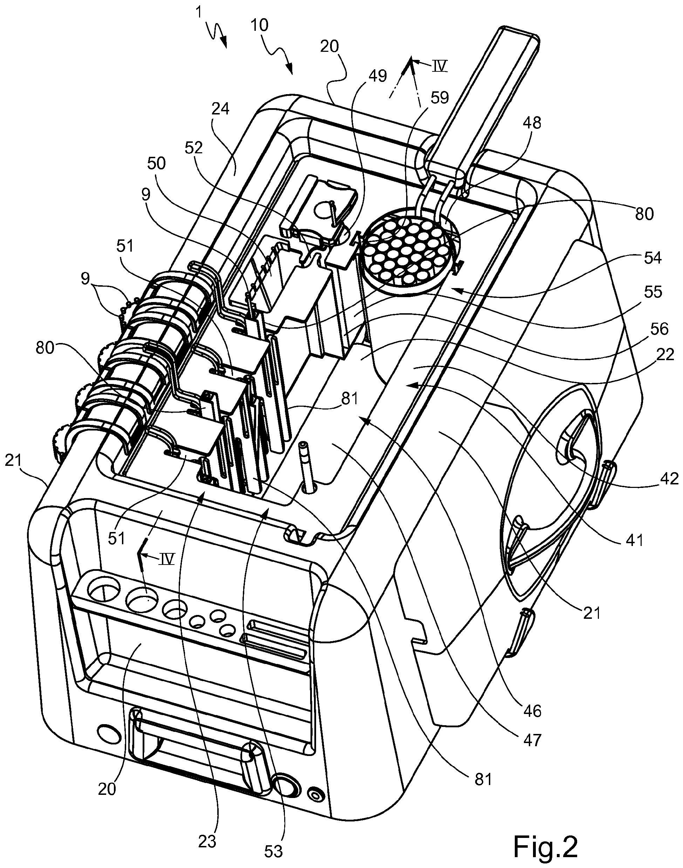

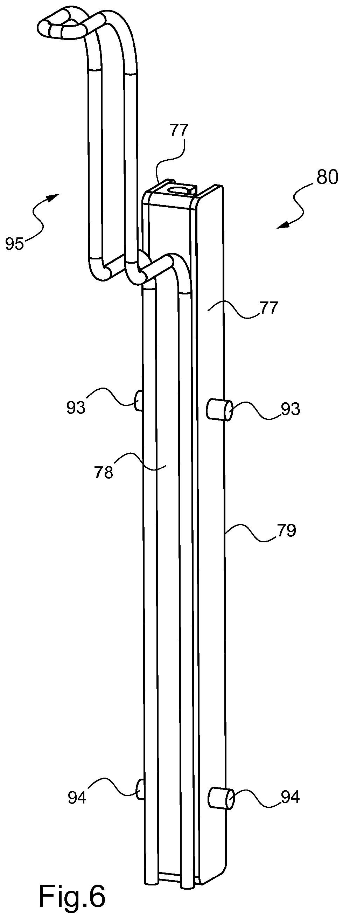

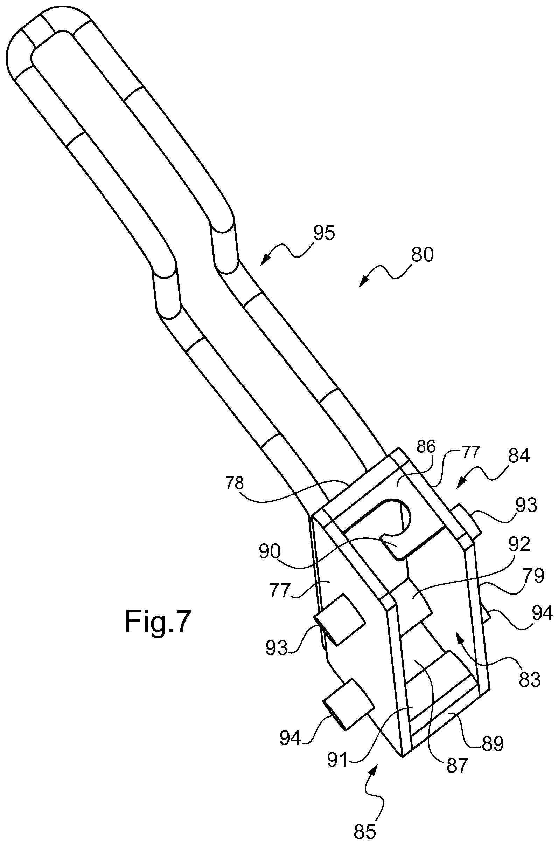

On va maintenant décrire en référence aux figures 2 à 13 un système de vitrification configuré pour permettre la vitrification et la dévitrification de telles paillettes 9.

Le système de vitrification 1 comporte un bac 10 configuré pour contenir un bain 11, c'est-à-dire un certain volume, de l'agent cryogénique.

Le bac 10 présente ici une forme sensiblement parallélépipédique et comporte une paroi de fond 19, deux parois transversales 20 s'étendant en regard l'une de l'autre depuis la paroi de fond 19, et deux parois longitudinales 21 s'étendant en regard l'une de l'autre et rejoignant la paroi de fond 19 et chacune des parois transversales 20.

Les parois de fond 19, transversales 20 et longitudinales 21 délimitent ensemble un espace interne 22 du bac 10 destiné à recevoir le bain 11 d'azote.

Le bac 10 présente en outre un bord supérieur 24, situé à l'opposé de la paroi de fond 19 et délimitant une ouverture 23 par laquelle l'espace interne 22 débouche.

Le bain 11 d'azote présente une zone liquide 17 dans laquelle l'azote est à l'état liquide et une zone gazeuse 18, surmontant la zone liquide 17, dans laquelle l'azote est à l'état gazeux.

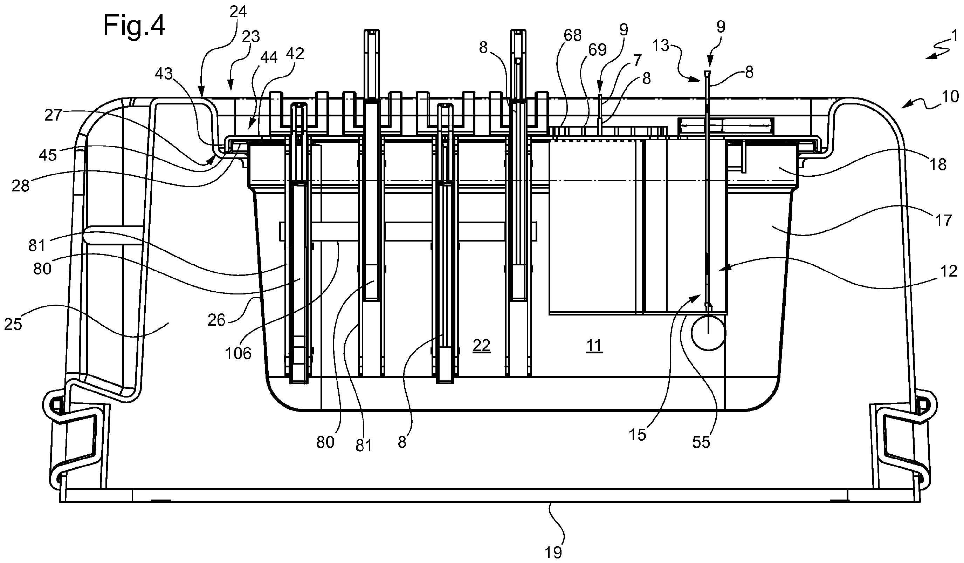

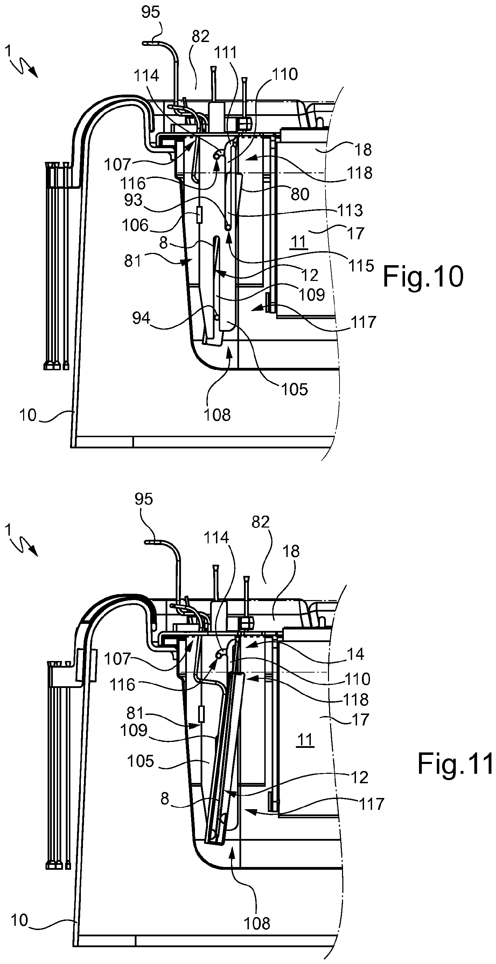

Les niveaux supérieurs que peuvent atteindre dans le bac 10 la zone liquide 17 et la zone gazeuse 18 sont représentés en traits mixtes sur la figure 4 et aussi sur les figures 10 à 13.

L'azote gazeux présent dans la zone gazeuse 18 provient de l'évaporation de l'azote liquide qui se produit dans un environnement d'utilisation du système de vitrification 1, où la température ambiante est bien différente de la température de la zone liquide de l'azote. Cette température ambiante peut par exemple être comprise entre environ 10 ° C à environ 25 ° C.

Dans la zone gazeuse 18, le volume d'azote gazeux émanant de l'azote liquide chasse l'air ambiant puis, du fait que l'azote gazeux est à température négative est ainsi plus lourd que l'air ambiant, a tendance à déborder du bac 10 en passant par-dessus son bord supérieur 24, et à se déverser vers la base du bac 10.

En d'autres termes, le niveau d'azote gazeux dans le bac 10 et en particulier les niveaux supérieur et inférieur de la zone gazeuse 18, sont déterminés respectivement par la position du bord supérieur 24 et par le niveau supérieur de la zone liquide 17.

En outre, on notera que du fait de l'évaporation de l'azote liquide, le volume d'azote présent dans la zone liquide 17 à tendance à diminuer au cours du temps, de sorte que le niveau supérieur de la zone liquide 17 a tendance à baisser dans le bac 10 au cours de cette opération.

Le bac 10 est pourvu d'une paroi externe isolante 25 et d'une paroi interne étanche 26 délimitant au moins partiellement l'espace interne 22. La paroi interne étanche 26 est ici emboîtée dans la paroi externe isolante 25.

Sur le haut du bac 10, la paroi externe isolante 25 présente un épaulement interne 27, tandis que la paroi interne étanche 26 présente une extension externe 28. L'extension externe 28 est ici disposée en appui sur l'épaulement interne 27 de la paroi externe isolante 25.

Chacune de la paroi de fond 19 et des parois transversales 20 et longitudinales 21 du bac 10 est formée par une portion respective de la paroi interne étanche 26 et une portion respective de la paroi externe isolante 25 s'étendant le long l'une de l'autre.

La paroi interne étanche 26 délimite une partie de l'espace interne 22 destinée à recevoir au moins la zone liquide 17 du bain 11. La paroi interne étanche 26 est ainsi réalisée en une matière étanche à l'azote liquide et résistante aux très basses températures.

La paroi externe isolante 25 est réalisée en une matière isolante de sorte à limiter les échanges de chaleur entre l'azote liquide et l'environnement extérieur au bac 10 au travers de la paroi de fond 19 et des parois transversales 20 et longitudinales 21 du bac 10.

Le bac 10 présente deux poignées de préhension formées par des renfoncements 29 ménagés dans les parois transversales 20, ainsi qu'un couvercle 30 amovible configuré pour être monté sur le bord supérieur 24 du bac pour obturer son ouverture 23. Le couvercle 30 est ici montré retiré du bord supérieur 24 et monté temporairement sur une des parois longitudinales 21.

Le bac 10 présente en outre, un renfoncement 33 ménagé dans l'une des parois transversales 20 et s'étendant depuis le bord supérieur 24 vers la paroi de fond 19, ainsi qu'une console 34 montée sur la paroi transversale 20 et s'étendant dans le renfoncement 33.

La console 34 est pourvue d'une pluralité d'orifices 35 configurés pour supporter des outils de travail tel qu'un tube à essai, un flacon ou une pipette.

Le système de vitrification 1 comporte en outre une pluralité de râteliers individuels 36 à paillettes 9 chacun configurés pour être accrochés de manière démontable sur le bord supérieur 24 du bac 10.

Chaque râtelier individuel 36 comporte une portion de maintien 37 des paillettes 9 et un crochet 38 saillant depuis la portion de maintien 37 et configuré pour s'accrocher sur le bord supérieur 24.

La portion de maintien 37 a la forme d'un demi-disque présentant à sa périphérie une face incurvée dans laquelle sont ménagées plusieurs encoches 40. Chaque encoche 40 est configurée pour maintenir dans une position debout un tube mince 8 d'une paillette 9 engagé à force dans l'encoche 40.

Le système de vitrification 1 comporte en outre un couvercle 41, ici métallique, monté sur un rebord 44 du bac 10, lequel rebord 44 est ici formé par l'extension externe 28 de la paroi interne étanche 26.

Le couvercle 41 a une forme sensiblement de tôle rectangulaire, présentant un panneau central 42 et un bord tombé 43 s'étendant transversalement au panneau central 42 depuis un côté externe de ce panneau central 42.

Le bord tombé 43 est en appui sur une portion terminale 45 de l'extension externe 28, laquelle est en appui sur l'épaulement interne 27 de la paroi externe isolante 25.

Le panneau central 42 du couvercle 41 s'étend au moins partiellement, et pour sa majeure partie, en regard de la paroi de fond 19, et par conséquent en surplomb de la zone liquide 17 lorsque le bac contient le bain 11 d'azote.

Le couvercle 41 est ici positionné dans la zone gazeuse 18 du bain 11 d'azote.

On pourrait aussi considérer que le couvercle est monté sur le rebord du bac et s'étend en surplomb du bain d'agent cryogénique, au-dessus de la zone gazeuse et en-dessous de la zone d'air ambiant, de sorte à former sensiblement une barrière entre la zone gazeuse du bain d'agent cryogénique et la zone d'air ambiant.

Le couvercle 41 présente en outre une ouverture 46 ménagée dans le panneau central 42 et débouchant de part et d'autre de ce dernier.

L'ouverture 46 comporte ici une partie de transit 47, une partie de stockage 48, une partie de découpe 49, un partie d'extraction 50 et quatre parties de vitrification 51.

L'ouverture 46 comporte en outre une partie formant un chemin 52 cheminant dans la partie de transit 47, la partie de découpe 49 et la partie d'extraction 50.

La partie de transit 47 s'étend longitudinalement entre un premier côté 53 et un deuxième côté 54 opposé au premier côté 53.

Le couvercle 41 est ici monté sur le bac 10 de sorte que le premier côté 53 est tourné vers l'une des parois transversales 20 du bac 10, tandis que le deuxième côté 54 est tourné vers l'autre des parois transversales 20 du bac 10.

La partie de stockage 48 s'étend en prolongeant de la partie de transit 47 depuis son deuxième côté 54.

Chaque partie de vitrification 51 s'étend depuis la partie de transit 47, transversalement à cette dernière. Chaque partie de vitrification 51 débouche dans la partie de transit 47, à distance de la partie de stockage 48.

Le couvercle 41 présente une patte 104 s'étendant dans chaque partie de vitrification 51, en direction de la partie de transit 47, depuis une extrémité de la partie de vitrification 51 respective opposée à la partie de transit 47.

Chaque partie de vitrification 51 s'étend ici en direction d'une des parois longitudinales 21 du bac 10. Ici, les parties de vitrification 51 s'étendent toutes du même côté de la partie de transit 47.

Les parties de vitrification 51 sont longitudinalement alignées et régulièrement espacées les unes des autres.

Les parties d'extraction 50 et de découpe 49 sont disposées dans l'alignement des parties de vitrification 51 et situées du côté de la partie de stockage 48. Les parties de vitrification 51, de découpe 49 et d'extraction 50 sont ainsi toutes situées ici du même côté par rapport à la partie de transit 47.

La partie de découpe 49 présente une forme sensiblement circulaire.

La partie d'extraction 50 présente une forme sensiblement rectangulaire.

Le couvercle 41 comporte en outre une paroi de cloisonnement 55 s'étendant depuis le panneau central 42, dans l'espace interne 22, de sorte à former un espace sensiblement fermé latéralement dans l'espace interne du bac 10, sous les parties de découpe 49, d'extraction 50 et de cheminement 52 ménagée dans l'ouverture 46.

La paroi de cloisonnement 55 présente une ouverture en bande mince 56 orientée sensiblement verticalement, pour l'entrée des paillettes dans l'espace du bac 10 délimité par cette paroi de cloisonnement 55.

Le système de vitrification 1 comporte en outre un gobelet multi-compartiments 60 configuré pour transporter une pluralité de paillettes 9, et un support de réception 57 monté sur le couvercle 41 et configuré pour maintenir le gobelet 60 selon une orientation prédéterminée.

Le support de réception 57 est monté sur le couvercle 41 au niveau de la partie de stockage 48 de l'ouverture 46, en étant au moins partiellement logé dans le bac 10.

Le gobelet multi-compartiments 60 a une forme cylindrique et présente, disposées à l'intérieur, une pluralité de tubulures 61 définissant chacune un logement de réception pour des paillettes 9.

Le support de réception 57 comporte un fût cylindrique 58 configuré pour recevoir de manière amovible le gobelet 60 au travers d'une ouverture 63 débouchant par le haut du fût 58, et deux rails 59 sur lesquels le fût 58 est monté rotatif.

Chaque rail 59 est fixé par une extrémité au panneau central 42 du couvercle et s'étend longitudinalement et sensiblement verticalement dans l'espace interne 22 du bac 10.

Le support de réception 57 comporte en outre un manche 62 fixé sur le fût cylindrique 58.

Sur la figure 2, le support de réception 57 est illustré dans une position de stockage où le gobelet multi-compartiments 60 se trouve sensiblement à la verticale. Le système est alors dans une première configuration dite de vitrification ou de dévitrification des paillettes.

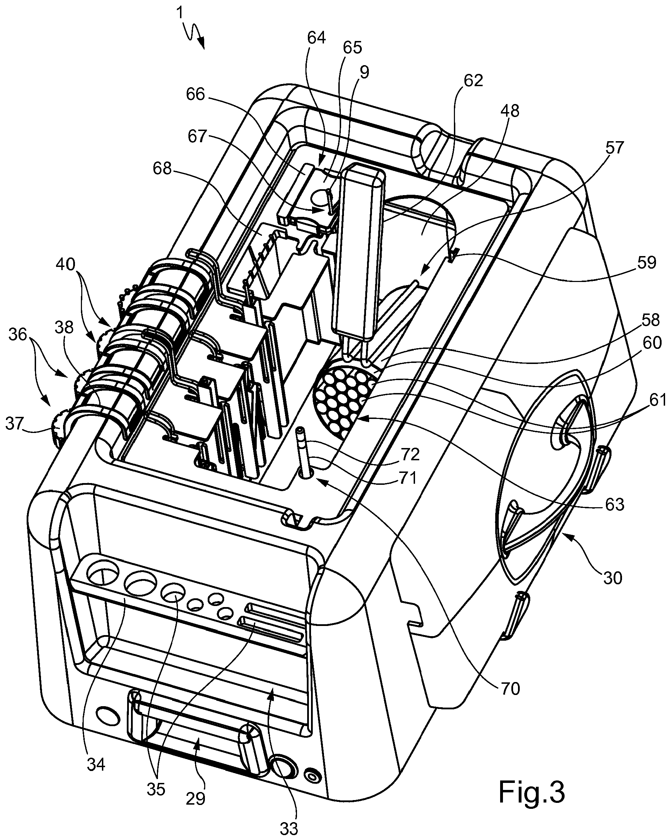

Sur la figure 3, le support de réception 57 est illustré dans une position de charge/décharge où le gobelet multi-compartiments 60 est incliné et au moins partiellement immergé dans la zone liquide 17 du bain 11 d'azote. Dans cette position, l'ouverture 63 du fût 58 débouche au moins partiellement dans l'espace interne 22 du bac 10. Le système est alors dans une deuxième configuration dite de charge ou de décharge des paillettes.

Le support de réception 57 est configuré de sorte qu'un utilisateur, en saisissant le manche 62, peut faire pivoter le fût 58 sur les rails 59 pour le faire passer de la position de charge/décharge à la position de stockage, et inversement.

Autrement dit, le support de réception 57 est mobile en rotation entre la position de charge/décharge et la position de stockage.

On notera que dans chacune des positions de charge/décharge et position de stockage, le tube mince 8 d'une paillette 9 reçue dans le gobelet multi-compartiments a sa région de réception 12 qui est immergée dans la zone liquide 17 du bain 11 d'azote.

Le système 1 comporte en outre un dispositif d'ouverture 64 monté sur le couvercle à proximité du gobelet multi-compartiments 60. Plus précisément, le dispositif d'ouverture 64 est monté sur le couvercle au niveau de la partie de découpe 49 de l'ouverture 46.

Le dispositif d'ouverture 64 comporte un corps 65, ici sensiblement parallélépipédique, présentant une charnière 66 sur un premier côté, par laquelle le corps 65 est monté pivotant sur le couvercle 41, et un organe de découpe 67, ou ciseau, sur un deuxième côté opposé au premier côté et donc à la charnière 66.

Le dispositif d'ouverture 64 est configuré pour adopter deux positions stables, à savoir une position relevée dans laquelle le corps 65 est orienté sensiblement verticalement et l'organe de découpe 67 est à distance de la partie de découpe 49 et une position couchée dans laquelle le corps 65 est orienté sensiblement horizontalement et l'organe de découpe 67 est situé au droit de la partie de découpe 49.

Le dispositif d'ouverture 64 est configuré pour découper le tube mince 8 d'une paillette 9 reçue dans la partie de découpe 49 au niveau de sa première extrémité 13.

Le système 1 comporte en outre un râtelier 68 monté sur le couvercle 41 à proximité du dispositif d'ouverture 64. Le râtelier 68 présente une pluralité d'encoches 69 chacune configurée pour maintenir dans une position debout le tube mince 8 d'une paillette 9, qui a été éventuellement ouvert au niveau de sa première extrémité 13, en maintenant la région de réception 12 du tube mince 8 immergée dans la zone liquide 17 du bain 11 d'azote.

Le système 1 comporte en outre un dispositif de contrôle 70 du niveau de la zone liquide 17 du bain 11 d'azote. Le dispositif de contrôle 70 comporte un bâtonnet flottant 71 configuré pour être partiellement immergé dans l'azote liquide, et un tube de guidage (non visible) monté sur le couvercle 41 et dans lequel le bâtonnet 71 est reçu à coulissement selon une direction sensiblement verticale. Le bâtonnet 71 est pourvu d'un indicateur visuel 72 permettant à l'utilisateur de déduire le niveau courant d'azote liquide dans le bac 10.

Le système 1 comporte en outre une pluralité d'organes de support 80, ici quatre, chacun étant configuré pour maintenir le tube mince 8 d'une paillette 9 selon une orientation prédéterminée et pour être monté sur le bac 10.

Ici, les organes de support 80 sont plus montés sur le bac 10 par l'intermédiaire du couvercle 41, qui est à cet effet pourvu de quatre rails de guidage 81.

Chaque rail de guidage 81 est fixé au panneau central 42 par une extrémité, au niveau d'une partie de vitrification 51 de l'ouverture 46, et s'étend longitudinalement et sensiblement verticalement ou de manière légèrement inclinée dans l'espace interne 22 du bac 10.

On notera que chaque rail de guidage est ainsi mécaniquement assujetti au bac 10, ici par l'intermédiaire du couvercle 41.

Chaque organe de support 80 est configuré pour être monté sur un rail de guidage 81 dans deux positions prédéterminées distinctes, respectivement une première position prédéterminée dite position haute et une deuxième position prédéterminée dite position basse, qui est plus basse, ou moins haute, que la première position prédéterminée.

Chaque organe de support 80 est configuré pour être relevé depuis la position basse vers la position haute.

Les organes de support 80 sont configurés pour être montés à coulissement sur les rails de guidage 81.

Chaque organe de support 80 est ainsi monté mobile sur et au travers du couvercle 41.

Plus précisément, chaque organe de support 80 est monté mobile sur un rail de guidage 81 selon une direction sensiblement verticale pour passer de la position basse à la position haute, et inversement.

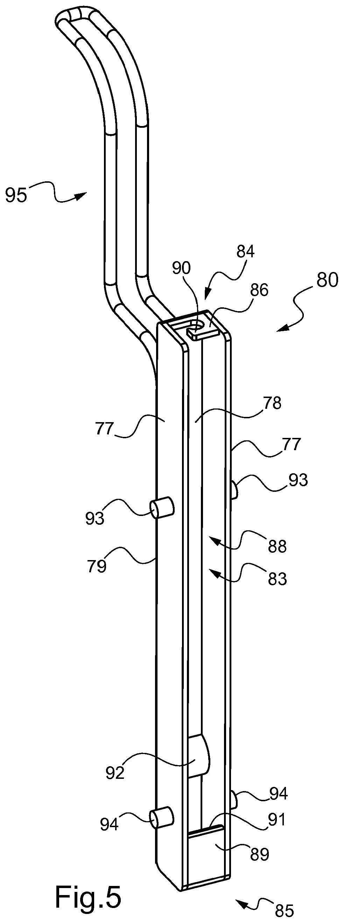

Ainsi qu'illustré sur les figures 5 à 8, chaque organe de support 80 comporte un corps 79, ici métallique, en forme de U présentant une paroi de fond 78 et des ailes latérales 77 en regard définissant ensemble un logement 83 pour le tube mince 8 d'une paillette 9.

Le corps 79 s'étend longitudinalement entre une extrémité supérieure 84 et une extrémité inférieure 85 opposée à l'extrémité supérieure 84.

Le logement 83 débouche longitudinalement à l'opposé de la paroi de fond 78 par une ouverture latérale 88 configurée pour recevoir le tube mince 8 pour son introduction dans le logement 83.

Le corps 79, et par conséquent l'ouverture 88, sont orientés sensiblement verticalement lorsque l'organe de support 80 est monté sur le rail de guidage 81, de sorte que le tube mince 8 est ici introduit et/ou extrait du logement 83 en étant orienté debout.

Le corps 79 présente en outre une paroi d'extrémité supérieure 86 et une paroi d'extrémité inférieure 87 s'étendant chacune transversalement en rejoignant la paroi de fond 78 et chacune des ailes latérales 77, et situées respectivement au niveau de l'extrémité supérieure 84 et de l'extrémité inférieure 85.

Chaque organe de support 80 présente en outre un crochet de retenue 90, ici formé par une encoche en L ménagée dans la paroi d'extrémité supérieure 86 du corps 79.

Le corps 79 présente en outre, au niveau de l'extrémité inférieure 85 du corps 79, une paroi de fermeture 89 s'étendant en regard de la paroi de fond 78 et rejoignant chacune des ailes latérales 77, de sorte à délimiter une partie du logement 83.

Le corps 79 présente en outre un premier bossage 91 ménagé sur la paroi de fermeture 89 et saillant dans le logement 83, ainsi qu'un deuxième bossage 92 ménagé sur la paroi de fond 78, saillant dans le logement 83, et situé à l'écart du premier bossage 91 du côté de l'une des extrémités inférieure et supérieure du corps 79.

Dans l'organe de support 80 illustré sur les figures 5 à 7, le deuxième bossage 92 est situé du côté de l'extrémité supérieure 84 du corps 79.

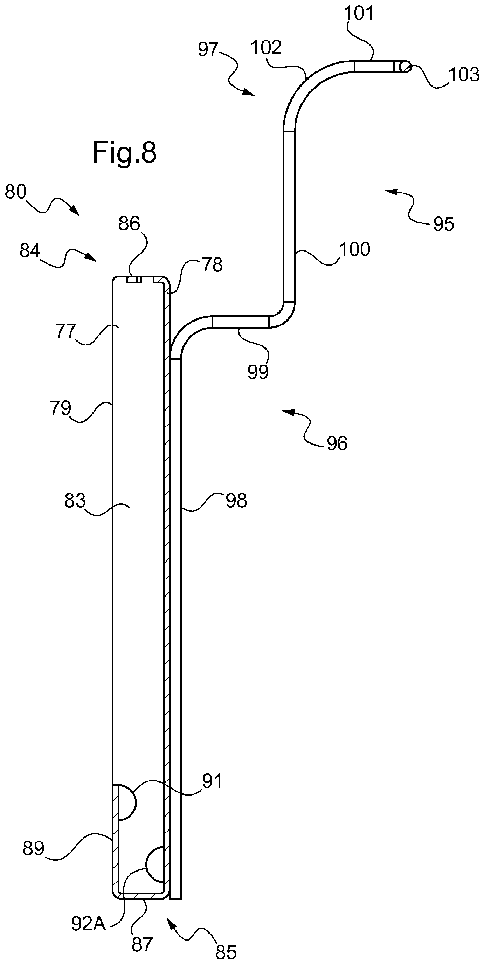

Dans une variante de réalisation de l'organe de support, illustrée sur la figure 8, le deuxième bossage 92A est situé du côté de l'extrémité inférieure 85 du corps 79.

Lorsque la paillette 9 est introduite dans l'organe de support 80, une portion inférieure du tube mince 8 est engagée entre les bossages 91 et 92, tandis qu'une portion supérieure du tube mince 8 est engagée dans le crochet de retenue 90.

Le tube mince 8 est ainsi bloqué en position sur l'organe de support 80 en étant au moins partiellement fléchi longitudinalement entre l'un et/ou l'autre des bossages 91 et 92 et le crochet de retenue 90.

Les bossages 91 et 92 forment ainsi deux pièces de coincement du tube mince 8 situées l'une du côté d'une extrémité basse du tube 8 et l'autre du côté d'une extrémité haute du tube 8 opposée à son extrémité basse.

Chaque organe de support 80 présente en outre des saillies supérieures 93 situées au voisinage de l'extrémité supérieure 84 du corps 79, et des saillies inférieures 94 situées au voisinage de l'extrémité inférieure 85 du corps 79.

Les saillies supérieures et inférieures 93 et 94 sont toutes ménagées sur le côté externe du corps 79.

Les saillies supérieures 93 et inférieures 94 sont ici ménagées sur les ailes latérales 77 et sont disposées de part et d'autre du corps 79.

Les saillies supérieures et inférieures 93 et 94 présentent toutes ici une forme cylindrique.

Chaque organe de support 80 comporte en outre un manche 95 fixé au corps 79 et configuré pour permettre à un utilisateur de manipuler l'organe de support 80.

Le manche 95 est ici formé par une tige métallique conformée en U, présentant deux bras 102 s'étendant en regard et une portion de jonction 103 reliant les deux pattes.

Le manche 95 présente ici un profil ayant une première portion 96 en forme de L, fixée sur le côté externe de la paroi de fond 78, et une deuxième portion 97 en forme de L prolongeant la première portion 96 du côté de l'extrémité supérieure 84 du corps 79.

La première portion 96 en L présente une première branche 98 fixée à la paroi de fond 78, par exemple par soudage, et s'étendant le long de cette dernière, et une deuxième branche 99 prolongeant la première branche 98 du côté opposé à la paroi de fond 78.

La deuxième portion 97 en L présente une première branche 100 prolongeant transversalement la deuxième branche 99 de la première portion 96 en L, et une deuxième branche 101 prolongeant transversalement la première branche 100 du côté opposé à la paroi de fond 78.

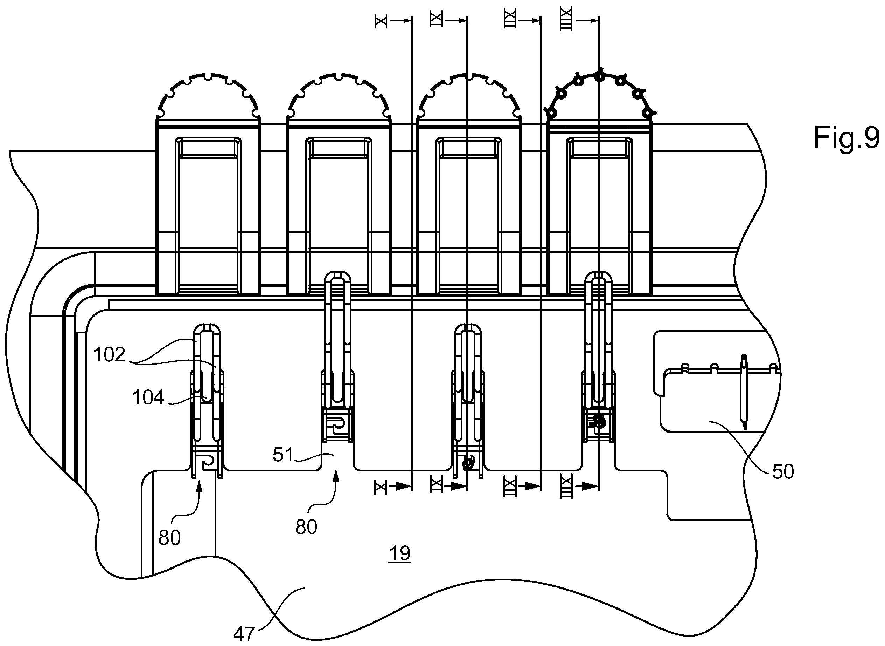

Ainsi qu'illustré sur les figures 9 à 13, les rails de guidage 81 sont ici tous identiques, de sorte que la description qui suit d'un rail de guidage 81 vaut pour les autres rails de guidage 81.

Le rail de guidage 81 s'étend longitudinalement entre une extrémité supérieure 107 par laquelle il est fixé au panneau central 42 du couvercle 41, et une extrémité inférieure 108 disposée en regard de la paroi de fond 19 du bac 10.

Le rail de guidage 81 est ici métallique et est soudé au panneau central 42.

Le rail de guidage 81 est formé par deux parois de montage 105 s'étendant longitudinalement en regard l'une de l'autre. Les parois de montages 105 sont chacune fixées sur le panneau central 42, de part et d'autre de la partie de vitrification 51 sous laquelle est fixé ce rail 81.

Le couvercle 41 présente ici un barreau de rigidification 106 mécaniquement assujetti à chacune des parois de montage 105, de sorte à rigidifier l'ensemble formé par ce barreau 106 et les parois de montage 105.

Les parois de montage 105 sont ici agencées de sorte à être l'image miroir l'une de l'autre.

Le rail de guidage 81 présente des encoches inférieures 109 ménagées chacune dans une portion inférieure 117 du rail de guidage 81 s'étendant depuis son extrémité inférieure 108.

Chaque encoche inférieure 109 est ménagée dans une paroi de montage 105 respective et s'étend sensiblement verticalement, en regard de l'encoche inférieure 109 de l'autre paroi de montage 105.

Chaque encoche inférieure 109 débouche au voisinage de l'extrémité inférieure 108 du rail de guidage 81.

Chaque encoche inférieure 109 est configurée pour recevoir à coulissement une saillie inférieure 94 de l'organe de support 80, lorsque ce dernier est monté sur le rail de guidage 81.

Le rail de guidage 81 présente en outre des encoches supérieures 110 ménagées chacune dans une portion supérieure 118 du rail de guidage 81 s'étendant depuis son extrémité supérieure 107 jusqu'à la portion inférieure 117.

Chaque encoche supérieure 110 est ménagée dans une paroi de montage 105 respective et s'étend en regard de l'autre encoche supérieure 110.

Chaque encoche supérieure 110 présente une première portion 113 s'étendant sensiblement verticalement et une deuxième portion 114 s'étendant sensiblement horizontalement et débouchant dans la première portion 113 au voisinage de l'extrémité supérieure 107 du rail de guidage 81.

Dans la première portion 113, l'encoche supérieure 110 présente un fond bas 115, situé à distance de l'extrémité supérieure 107.

Dans la deuxième portion 114, l'encoche supérieure 110 présente un fond haut 116 situé au voisinage de l'extrémité supérieure 107. La deuxième portion 114 présente ici une forme incurvée vers le bas.

Chaque encoche supérieure 110 présente en outre une portion d'insertion 111, située au voisinage de l'extrémité supérieure 107 du rail de guidage 81, prolongeant transversalement la première portion 113 et débouchant frontalement dans l'espace interne 22.

Chaque encoche supérieure 110 est configurée pour recevoir à coulissement une saillie supérieure 93 de l'organe de support 80, lorsque ce dernier est monté sur le rail de guidage 81.

Cette saillie supérieure 93 est introduite dans l'encoche supérieure 110 en passant par la portion d'insertion 111.

Chaque organe de support 80 est configuré pour être monté sur un rail de guidage 81 avec le corps 79 qui est reçu entre les parois de montage 105, les saillies inférieures 94 étant reçues les encoches inférieures 109 et les saillies supérieures 93 étant reçues dans les encoches supérieures 110.

On notera que la patte 104 du couvercle 41 est reçue entre les bras 102 du manche 95.

Sur les figures 10 et 11, un organe de support 80 est monté en position basse, ou deuxième position, sur un rail de guidage 81, une paillette 9 étant reçue dans cet organe de support 80.

Dans cette position basse, les saillies supérieures 93 reposent chacune sur le fond bas 115 des encoches supérieures 110, de sorte que le fond bas 115 définit la position basse de l'organe de support 80.

Autrement dit, chaque saillie supérieure 93 forme une saillie de positionnement bas tandis que chaque première portion 113 d'encoche supérieure 110 forme une première encoche de positionnement bas, ou une butée, configurée pour recevoir une saillie de positionnement haut et définissant la deuxième position prédéterminée.

Dans cette position basse, le tube mince 8 est orienté globalement debout dans le bac 10, la région de réception 12 du tube mince 8 est immergée dans la zone liquide 17, et l'ouverture 14 du tube mince 8 est située immédiatement au-dessus de la zone liquide 17, dans la zone gazeuse 18 du bain 11 d'azote, et en-dessous de la zone d'air ambiant 82 surmontant le bain 11 d'azote.

Dans cette position basse, le tube mince 8 est orienté globalement debout mais présente une légère inclinaison par rapport à la verticale.

Dans cette position basse, le tube mince 8 est entièrement en contact avec l'azote, partiellement dans la zone liquide 17 du bain 11 et partiellement dans la zone gazeuse 18 du bain 11.

Le tube mince 8 est ainsi refroidi sur toute sa longueur, depuis la région de réception 12 de la substance jusqu'à son ouverture 14.

Le fait que l'ouverture 14 du tube mince 8 est située dans la zone gazeuse 18 du bain 11 d'azote permet de ne pas remplir un volume interne du tube mince 8 (au moins partiellement dédié à la substance) avec de l'azote à l'état liquide mais plutôt avec de l'azote à l'état gazeux, qui est plus froid que l'air ambiant, et donc qui chasse par convection l'air ambiant hors du tube mince 8.

Ainsi, le tube mince 8 est refroidi par l'azote non seulement par le contact direct d'une face externe du tube mince 8 avec l'azote à l'état liquide et à l'état gazeux, mais aussi par le contact direct d'une face interne du tube mince 8 avec l'azote à l'état gazeux.

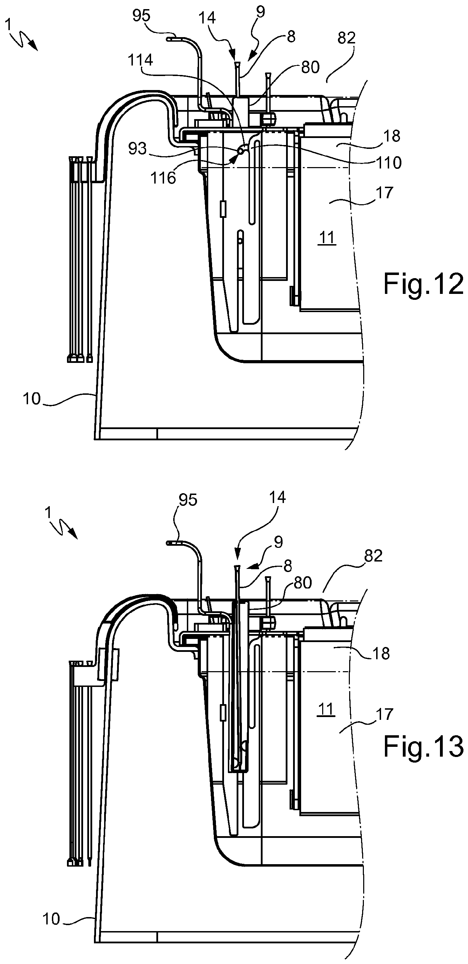

Sur les figures 12 et 13, l'organe de support 80 a été relevé par un utilisateur depuis sa position basse (deuxième position) et se trouve dans en position haute, ou première position.

Dans cette position haute, les saillies supérieures 93 reposent sur le fond haut 116 des encoches supérieures 110, de sorte que le fond haut 116 définit la position haute de l'organe de support 80.

Autrement dit, chaque saillie supérieure 93 forme ici aussi une saillie de positionnement haut tandis que chaque deuxième portion 114 d'encoche supérieure 110 forme une deuxième encoche de positionnement haut configurée pour recevoir une saillie de positionnement haut et définissant la première position prédéterminée.

Dans cette position haute, le tube mince 8 d'une paillette 9 reçue dans l'organe de support 80 est orienté debout dans le bac 10, la région de réception 12 du tube mince 8 est immergée dans la zone liquide 17 du bain 11 d'azote, et l'ouverture 14 du tube mince 8 est située au-dessus du bain 11 d'azote, dans la zone de l'air ambiant 82 surmontant le bain 11 d'azote.

L'ouverture 14 se trouve donc au-dessus de la zone gazeuse 18, ici à environ 20 mm au-dessus de cette zone 18.

Dans cette position haute, il est possible d'introduire le jonc 7 pourvu de la substance à vitrifier dans le tube mince 8, au travers de son ouverture 14 qui est facilement accessible puisqu'elle se trouve au-dessus du couvercle.

On notera que pour faire passer l'organe de support 80 de la position basse à la position haute, l'utilisateur saisit ici le manche 95 et tire vers le haut jusqu'à ce que chaque saillie supérieure 93 arrive en regard d'une deuxième portion 114 d'une encoche supérieure 110, puis tire horizontalement pour introduire la saillie supérieure 93 dans cette deuxième portion 114.

On notera qu'au cours de ce mouvement, chaque saillie supérieure 93 et chaque saillie inférieure 94 est guidée à coulissement respectivement par la première portion 113 de l'encoche supérieure 110 dans laquelle la saillie supérieure 93 est engagée, et par l'encoche inférieure 109 dans laquelle la saillie inférieure 94 est engagée.

Les saillies supérieures 93 et les saillies inférieures 94 forment ainsi des saillies de guidage, tandis que les premières portions 113 des encoches supérieures 110 et les encoches inférieures 109 d'un rail de guidage 81 forment des encoches de guidage s'étendant sensiblement verticalement et au moins partiellement le long du rail de guidage 81, et sont au surplus configurées pour recevoir à coulissement les saillies de guidage, lorsque l'organe de support 80 est déplacé depuis sa deuxième position prédéterminée vers sa première position prédéterminée.

On va maintenant décrire un procédé de vitrification, puis de dévitrification, de la substance comportant de la matière biologique à conserver, à l'aide du système 1 décrit ci-dessus.

Le tube mince 8 d'une paillette 9 est disposé dans l'organe de support 80 puis ce dernier est monté sur le couvercle 41 du bac 10 en position basse de sorte que le tube mince 8 est orienté debout dans le bac 10, avec sa région de réception 12 immergée dans la zone liquide 17 du bain 11 d'azote, et son ouverture 14 qui est située immédiatement au-dessus de la zone liquide 17, dans la zone gazeuse 18 du bain 11 d'azote.

Le tube mince 8 est laissé dans cette position pendant un temps prédéterminé afin d'être refroidi jusqu'à une température souhaitée.

Une fois le tube mince 8 à la température souhaitée, l'organe de support 80 est relevé depuis la position basse vers la position haute de sorte que le tube mince 8 est orienté debout dans le bac, avec sa région de réception 12 toujours immergée dans la zone liquide 17 du bain d'azote, et son ouverture 14 qui est située au-dessus du bain 11 d'azote, dans une zone de l'air ambiant surmontant le bain 11 d'azote.

Le jonc 7 de la paillette 9, sur la gouttière 6 duquel a été préalablement déposé un volume de substance à vitrifier, est alors introduit dans le tube mince 8 par son ouverture 14 de sorte que la gouttière 6 et le volume de substance reçu dans la gouttière 6, se situent dans la région de réception 12 du tube mince 8.

Le tube mince 8 est alors scellé au niveau de sa première extrémité 13 à l'aide d'un dispositif de soudure, alors qu'il est toujours maintenu dans l'organe de support 80 en position haute, la région de réception 12 du tube 8 étant ainsi toujours immergée dans l'azote liquide.

Une fois le tube 8 scellé, l'organe de support 80 est ramené vers sa position basse pour que le tube 8 soit à nouveau entièrement immergé dans le bain 11 d'azote, pour partie dans la zone liquide 17 et pour partie dans la zone gazeuse 18.

Le gobelet multi-compartiments 60 est alors introduit dans le fût 58 du support de réception 57 alors que ce dernier se trouve dans la position de stockage. Le gobelet multi-compartiments 60 se trouve ainsi sensiblement à la verticale et au moins partiellement logé dans le bac 10, c'est-à-dire au moins partiellement immergé dans le bain 11 d'azote.

Le support de réception 57 est alors déplacé en rotation depuis sa position de stockage vers sa position de charge/décharge de sorte que le gobelet 60 est incliné et au moins partiellement immergé dans la zone liquide 17 du bain 11 d'azote liquide. En particulier, dans cette position de charge/décharge, l'ouverture 63 du fût 58 est au moins partiellement immergée dans la zone liquide 17 du bain 11.

La paillette 9, avec son tube mince 8 obturé au niveau de chacune de ses première et deuxième extrémités 13 et 15 est alors passée depuis l'organe de support 80 dans laquelle elle est reçue, lequel organe de support 80 est en position basse, vers le gobelet multi-compartiments 60 tout en restant en majeure partie immergée dans le bain 11 d'azote, et en particulier dans la zone liquide 17.

Le support de réception 57 est alors redressé vers la position de stockage dans laquelle le gobelet 60 se trouve sensiblement à la verticale.

Le support de réception 57 et le gobelet 60 sont configurés de sorte que, dans cette position de stockage, au moins la région de réception 12 du tube mince 8 de chacune des paillettes 9 reçues dans le gobelet 60 est immergée dans la zone liquide 17 du bain 11 d'azote.

La paillette 9 avec la substance vitrifiée peut alors être transportée hors du bac 10 avec le gobelet 60 afin d'être stockée dans un endroit dédié.

Pour opérer la dévitrification, la paillette 9 vitrifiée est retirée de son lieu de stockage puis disposée dans le gobelet 60.

Le gobelet 60 est amené devant le système 1 et introduit dans le bac 10, dans son support de réception 57.

Le support de réception 57 est pivoté jusqu'à sa position de charge/décharge dans laquelle le gobelet 60 est incliné.

La paillette 9 est alors extraite du gobelet 60 puis amené dans la partie de l'espace interne 22 du bac 10 qui est délimitée par la paroi de cloisonnement 55, en passant par l'ouverture en bande mince 56.

La paillette 9 est acheminée par le chemin 52 jusqu'à la partie de découpe 49, avec le dispositif d'ouverture 64 qui se trouve en position relevée.

Ce dernier est passé de sa position relevée à sa position couchée de sorte à découper, grâce à l'organe de découpe 67, le tube mince 8 au niveau de sa première extrémité 13 afin de rendre accessible le jonc 7.

Le dispositif d'ouverture 64 est passé de sa position couchée à sa position relevée et la paillette 9 avec le tube 8 découpé est alors acheminée depuis la partie de découpe 49 jusque dans la partie d'extraction 50, où le tube mince 8 est engagé dans une encoche de réception 69 du râtelier 68 pour y être maintenu. Il est alors possible de retirer le jonc 7 du tube 8 pour récupérer la substance à dévitrifier.

Dans des variantes non illustrées :
- le système comporte plus ou moins de parties de vitrifications et ces parties peuvent être localisées différemment dans le couvercle et plus généralement dans le bac ; par exemple elles peuvent être situées de part et d'autre de la partie de transit ;
- le système peut être configuré pour positionner l'organe de support et donc la paillette dans au moins une autre positionnée prédéterminée, située par exemple entre les première et deuxième positions prédéterminées décrites plus haut, voire plus haute que la première position où la paillette ne serait pas ou quasiment pas plongée dans la zone liquide du bain, voire au contraire plus basse que la deuxième position où la paillette serait complètement ou quasiment plongée dans la zone liquide du bain ;
- le dispositif d'ouverture et/ou le râtelier ne sont pas montés sur le bac par l'intermédiaire du couvercle, mais sont plutôt montés directement sur le bac ;
- l'une des ailes latérales du corps de l'organe de support est dépourvue de saillie ;
- le rail de guidage ne présente qu'une seule paroi de montage ;
- les saillies de positionnement sont ménagées sur les ailes latérales du rail de guidage plutôt que sur le corps de l'organe de support, tandis que les encoches sont ménagées dans le corps de l'organe de support plutôt que dans les ailes latérales du rail de guidage ;
- l'organe de support n'est pas monté à coulissement sur le rail de guidage mais est monté sur le rail de guidage via une articulation configurée pour que l'organe de support soit mobile et amovible, par exemple via un mécanisme à glissières ;
- le bac ne présente pas une forme parallélépipédique mais une autre forme, par exemple cylindrique ;
- le couvercle peut être agencé différemment sur le bac et les parties de vitrification, de transit, d'extraction, de découpe et de stockage peuvent aussi être agencées différemment les unes par rapport aux autres ; et/ou
- l'environnement dans lequel est utilisé le système peut être une salle dont l'air ambiant est assimilable à l'atmosphère ou, une salle dont la température et/ou la pression sont contrôlées.

De nombreuses autres variantes sont possibles en fonction des circonstances, et l'on rappelle à cet égard que l'invention ne se limite pas aux exemples décrits et représentés.

## Revendications

1. Système de vitrification cryogénique d'une substance, ladite substance comportant de la matière biologique à conserver, telle qu'un embryon ou un ovocyte, et reçue dans une enveloppe de conditionnement (9), ladite enveloppe comportant un tube mince (8) de dimensions prédéterminées présentant une ouverture (14) à une première extrémité (13) et obturé au voisinage d'une deuxième extrémité (15) opposée à ladite première extrémité (13), ladite enveloppe (9) faisant partie d'un ensemble de conditionnement de ladite substance comportant, en outre de ladite enveloppe (9), un support de réception (7) configuré pour recevoir un volume prédéterminé de ladite substance et pour être introduit à l'intérieur dudit tube mince (8) de sorte que ledit volume prédéterminé de ladite substance se situe dans une région de réception (12) dudit tube mince (8) située à distance de ladite ouverture (14) dudit tube mince (8) ;
ledit système (1) comportant un bac (10) configuré pour contenir un bain (11) d'un agent cryogénique et au moins un organe de support (80) configuré pour maintenir ledit tube mince (8) selon une orientation prédéterminée et pour être monté sur ledit bac (10) dans une première position prédéterminée dans laquelle ledit tube mince (8) est orienté debout dans ledit bac (10), ladite région de réception (12) dudit tube mince (8) est immergée dans une zone liquide (17) dudit bain (11) d'agent cryogénique où ledit agent cryogénique est à l'état liquide, et ladite ouverture (14) dudit tube mince (8) est située au-dessus dudit bain (11) d'agent cryogénique, dans une zone d'air ambiant (82) surmontant ledit bain (11) d'agent cryogénique, pour permettre l'introduction dudit support de réception (7) de ladite substance dans ledit tube mince (8) ;
ledit système étant **caractérisé en ce que** ledit organe de support (80) est configuré pour être monté sur ledit bac (10) dans au moins une deuxième position prédéterminée, plus basse que ladite première position prédéterminée, deuxième position prédéterminée dans laquelle ledit tube mince (8) est orienté debout dans ledit bac (10), ladite région de réception (12) dudit tube mince (8) est immergée dans ladite zone liquide (17), et ladite ouverture (14) dudit tube mince (8) est située immédiatement au-dessus de ladite zone liquide (17), dans une zone gazeuse (18) dudit bain (11) d'agent cryogénique, surmontant ladite zone liquide (17) et où ledit agent cryogénique est à l'état gazeux, et en-dessous de ladite zone d'air ambiant (82) surmontant ledit bain (11) d'agent cryogénique, et pour être relevé depuis ladite deuxième position prédéterminée vers ladite première position prédéterminée.

2. Système selon la revendication 1, **caractérisé en ce qu'**il comporte au moins un rail de guidage (81) mécaniquement assujetti audit bac (10), ledit organe de support (80) étant monté mobile sur ledit rail de guidage selon une direction sensiblement verticale pour passer de ladite deuxième position prédéterminée à ladite première position prédéterminée, et inversement.

3. Système selon la revendication 2, **caractérisé en ce que** ledit organe de support (80) comporte au moins une saillie de positionnement (93) et ledit rail de guidage (81) comporte une première encoche de positionnement (113) et une deuxième encoche de positionnement (114) configurées chacune pour recevoir ladite au moins une première saillie et définissant respectivement ladite première position prédéterminée et la deuxième position prédéterminée

4. Système selon l'une des revendications 2 ou 3, **caractérisé en ce que** ledit organe de support (80) est monté à coulissement sur ledit rail de guidage (81).

5. Système selon la revendication 4, **caractérisé en ce que** ledit organe de support (80) comporte au moins une saillie de guidage (94) et le rail de guidage (81) comporte au moins une encoche de guidage (109) s'étendant sensiblement verticalement et au moins partiellement le long dudit rail de guidage et configurée pour recevoir à coulissement ladite au moins une saillie de guidage, lorsque ledit organe de support est déplacé depuis sa deuxième position prédéterminée vers sa première position prédéterminée.

6. Système selon l'une quelconque des revendications 1 à 5, **caractérisé en ce que** l'organe de support (80) comporte un corps en forme de U (79) présentant un fond (78) et des ailes latérales (77) en regard définissant ensemble un logement (83) pour ledit tube mince (8) de ladite enveloppe (9), lequel logement débouche longitudinalement à l'opposé dudit fond par une ouverture latérale (88) configurée pour recevoir ledit tube orienté debout pour son introduction dans ledit logement.

7. Système selon l'une quelconque des revendications 1 à 6, **caractérisé en ce que** ledit organe de support (80) est pourvu, du côté d'une extrémité basse (85), d'au moins une pièce de coincement (91, 92) dudit tube mince (8) et, du côté d'une extrémité haute (84) opposée à son extrémité basse, d'un crochet de retenue (90) dudit tube mince.

8. Système selon la revendication 7, **caractérisé en ce que** ledit organe de support (80) est configuré de sorte que ledit tube mince (8) est bloqué en position sur ledit organe de support et au moins partiellement fléchi longitudinalement entre ladite au moins une pièce de coincement (91, 92, 92A) et ledit crochet de retenue (90).

9. Système selon l'une quelconque des revendications 1 à 8, **caractérisé en ce que** ledit système (1) comporte un couvercle (41) monté sur un rebord (44) dudit bac (10) et s'étendant en surplomb de ladite zone liquide (17), et ledit organe de support (80) est monté mobile sur et au travers dudit couvercle.

10. Système selon la revendication 9, **caractérisé en ce que** ledit couvercle (41) est positionné dans ladite zone gazeuse (18) dudit bain (11) d'agent cryogénique.

11. Système selon la revendication 10, **caractérisé en ce que** ledit bac (10) est pourvu d'une paroi externe isolante (25) et d'une paroi interne étanche (26) délimitant au moins partiellement un espace interne (22) de réception du bain (11) d'agent cryogénique, ladite paroi externe isolante ayant un épaulement interne (27) ménagé sur le haut dudit bac, ladite paroi interne étanche ayant une extension externe (28) ménagée sur le haut dudit bac et disposée en appui sur ledit épaulement de ladite paroi externe, ladite extension externe formant ledit rebord dudit bac sur lequel est positionné ledit couvercle.

12. Système selon l'une quelconque des revendications 1 à 11, **caractérisé en ce qu'**il comporte un gobelet multi-compartiments (60) configuré pour transporter une pluralité de dites enveloppes de conditionnement (9), un support de réception (57) au moins partiellement logé dans ledit bac (10) et configuré pour recevoir, de manière amovible, ledit gobelet multi-compartiments de sorte qu'au moins la région de réception (12) du tube mince (8) de chacune de ladite pluralité de dites enveloppes de conditionnement est immergée dans ladite zone liquide (17) dudit bain (11) d'agent cryogénique.

13. Système selon la revendication 12, **caractérisé en ce que** ledit support de réception (57) dudit gobelet multi-compartiments (60) est mobile en rotation entre une position de stockage où ledit gobelet multi-compartiments se trouve sensiblement à la verticale et une position de charge/décharge où ledit gobelet multi-compartiments est incliné et au moins partiellement immergé dans ladite zone liquide (17) dudit bain (11) d'agent cryogénique ; grâce à quoi ledit système (1) est configuré pour faire passer une dite enveloppe de conditionnement (9) obturée au niveau de chacune de ses première et deuxième extrémité (13 ; 15) au moins depuis ledit organe de support (80) vers ledit gobelet multi-compartiments en restant en majeure partie immergée dans ledit bain d'agent cryogénique.

14. Système selon l'une des revendications 12 et 13, **caractérisé en ce qu'**il comporte un dispositif d'ouverture (64) configuré pour découper ledit tube mince (8) de ladite enveloppe de conditionnement (9), au niveau d'une desdites première et deuxième extrémités (13 ; 15), et monté sur ledit bac (10) à proximité dudit gobelet multi-compartiments (60).

15. Système selon la revendication 14, **caractérisé en ce qu'**il comporte un râtelier (68) monté sur ledit bac (10) à proximité dudit dispositif d'ouverture (64) et présentant une pluralité d'encoches (69) chacune configurée pour maintenir dans une position debout un tube mince (8) d'une dite enveloppe de conditionnement (9), ouvert au niveau d'une desdites première et deuxième extrémités (13 ; 15), ledit râtelier étant configuré de sorte que la région de réception (12) dudit tube mince est immergée dans la zone liquide (17) dudit bain (11) d'agent cryogénique,

16. Système selon l'une quelconque des revendications 1 à 15, **caractérisé en ce qu'**il comporte un dispositif de contrôle (70) de niveau de ladite zone liquide (17) dudit bain (11) d'agent cryogénique dans ledit bac (10).

17. Procédé de vitrification d'une substance comportant de la matière biologique à conserver, telle qu'un embryon ou un ovocyte, à l'aide du système (1) selon l'une quelconque des revendications 1 à 16, comportant les étapes de :
- fournir un ensemble de conditionnement de ladite substance comportant une enveloppe de conditionnement (9) ayant un tube mince (8) de dimensions prédéterminées présentant une ouverture (14) à une première extrémité (13) et obturé au voisinage d'une deuxième extrémité (15) opposée à ladite première extrémité, et un support de réception (7) configuré pour recevoir un volume prédéterminé de ladite substance et pour être introduit à l'intérieur dudit tube mince de sorte que ledit volume prédéterminé de ladite substance se situe dans une région de réception (12) dudit tube mince située à distance de ladite ouverture dudit tube mince ;
- fournir ledit bac (10) contenant un bain (11) d'un agent cryogénique ;
- fournir ledit au moins un organe de support (80) configuré pour être monté sur ledit bac et pour maintenir ledit tube mince selon une orientation prédéterminée ;
- disposer ledit tube mince dans ledit organe de support selon ladite orientation prédéterminée ;
- monter ledit organe de support sur ledit bac dans ladite au moins une deuxième position prédéterminée dans laquelle ledit tube mince est orienté debout dans ledit bac, ladite région de réception dudit tube mince étant immergée dans une zone liquide (17) dudit bain d'agent cryogénique où ledit agent cryogénique est à l'état liquide, et ladite ouverture dudit tube mince étant située immédiatement au-dessus de ladite zone liquide, dans une zone gazeuse (18) dudit bain d'agent cryogénique, surmontant ladite zone liquide et où ledit agent cryogénique est à l'état gazeux, et en-dessous d'une zone d'air ambiant (82) surmontant ledit bain d'agent cryogénique ;
- relever ledit organe de support depuis ladite deuxième position prédéterminée vers ladite première position prédéterminée, plus haute que ladite deuxième position prédéterminée, dans laquelle ledit tube mince est orienté debout dans ledit bac, ladite région de réception dudit tube mince étant immergée dans ladite zone liquide dudit bain d'agent cryogénique, et ladite ouverture dudit tube mince étant située au-dessus dudit bain d'agent cryogénique, dans une zone d'air ambiant surmontant ledit bain d'agent cryogénique, pour permettre l'introduction dudit support de réception de ladite substance dans ledit tube mince ;
- déposer ladite substance sur ledit support et introduire ledit support dans ledit tube mince ; et
- sceller ledit tube mince au niveau de sa deuxième extrémité.

## Patentansprüche

1. System zur kryogenen Vitrifikation einer Substanz, wobei die Substanz biologisches Material umfasst, das konserviert werden soll, wie etwa ein Embryo oder eine Eizelle, und in einer Verpackungshülle (9) aufgenommen ist, wobei die Hülle ein dünnes Röhrchen (8) mit vorbestimmten Abmessungen umfasst, das an einem ersten Ende (13) eine Öffnung (14) aufweist und in der Nähe eines dem ersten Ende (13) gegenüberliegenden zweiten Endes (15) verschlossen ist, wobei die Hülle (9) Teil eines Verpackungssets für die Substanz ist, das neben der Hülle (9) einen Aufnahmeträger (7) umfasst, der konfiguriert ist, um ein vorbestimmtes Volumen der Substanz aufzunehmen und um in das Innere des dünnen Röhrchens (8) eingebracht zu werden, sodass das vorbestimmte Volumen der Substanz sich in einer Aufnahmeregion (12) des dünnen Röhrchens (8) befindet, die sich in Entfernung von der Öffnung (14) des dünnen Röhrchens (8) befindet;
wobei das System (1) einen Behälter (10), der konfiguriert ist, um ein Bad (11) aus einem kryogenen Mittel zu enthalten, und mindestens ein Trägerorgan (80) umfasst, das konfiguriert ist, um das dünne Röhrchen (8) in einer vorbestimmten Ausrichtung zu halten und um in einer vorbestimmten ersten Position, in der das dünne Röhrchen (8) aufrecht in dem Behälter (10) ausgerichtet ist, an dem Behälter (10) angebracht zu werden, wobei die Aufnahmeregion (12) des dünnen Röhrchens (8) in eine flüssige Zone (17) des Bades (11) aus kryogenem Mittel, in der das kryogene Mittel sich im flüssigen Zustand befindet, getaucht ist, und die Öffnung (14) des dünnen Röhrchens (8) sich über dem Bad (11) aus kryogenem Mittel in einer Umgebungsluftzone (82) befindet, die über dem Bad (11) aus kryogenem Mittel liegt, um das Einbringen des Aufnahmeträgers (7) der Substanz in das dünne Röhrchen (8) zu ermöglichen;
wobei das System **dadurch gekennzeichnet ist, dass** das Trägerorgan (80) konfiguriert ist, um in mindestens einer zweiten vorbestimmten Position, die niedriger ist als die erste vorbestimmte Position, an dem Behälter (10) angebracht zu werden, wobei in der zweiten vorbestimmten Position das dünne Röhrchen (8) aufrecht in dem Behälter (10) ausgerichtet ist, die Aufnahmeregion (12) des dünnen Röhrchens (8) in die flüssige Zone (17) getaucht ist, und die Öffnung (14) des dünnen Röhrchens (8) sich unmittelbar über der flüssigen Zone (17) in einer gasförmigen Zone (18) des Bades (11) aus kryogenem Mittel, die über der flüssigen Zone (17) liegt, und in der sich das kryogene Mittel im gasförmigen Zustand befindet, und unter der Umgebungsluftzone (82) befindet, die über dem Bad (11) aus kryogenem Mittel liegt, und um aus der zweiten vorbestimmten Position in die erste vorbestimmte Position gehoben zu werden.

2. System nach Anspruch 1, **dadurch gekennzeichnet, dass** es mindestens eine Führungsschiene (81) umfasst, die mechanisch an den Behälter (10) gebunden ist, wobei das Trägerorgan (80) in einer im Wesentlichen vertikalen Richtung beweglich an der Führungsschiene angebracht ist, um von der zweiten vorbestimmten Position in die erste vorbestimmte Position, und umgekehrt, zu gelangen.

3. System nach Anspruch 2, **dadurch gekennzeichnet, dass** das Trägerorgan (80) mindestens einen Positioniervorsprung (93) umfasst, und die Führungsschiene (81) eine erste Positionierkerbe (113) und eine zweite Positionierkerbe (114) umfasst, die jeweils konfiguriert sind, um den mindestens einen ersten Vorsprung aufzunehmen, und die erste vorbestimmte Position bzw. die zweite vorbestimmte Position definieren.

4. System nach einem der Ansprüche 2 oder 3, **dadurch gekennzeichnet, dass** das Trägerorgan (80) verschiebbar an der Führungsschiene (81) angebracht ist.

5. System nach Anspruch 4, **dadurch gekennzeichnet, dass** das Trägerorgan (80) mindestens einen Führungsvorsprung (94) umfasst, und die Führungsschiene (81) mindestens eine Führungskerbe (109) umfasst, die sich im Wesentlichen vertikal und mindestens teilweise entlang der Führungsschiene erstreckt und konfiguriert ist, um den mindestens einen Führungsvorsprung verschiebbar aufzunehmen, wenn das Trägerorgan von seiner zweiten vorbestimmten Position zu seiner ersten vorbestimmten Position verlagert wird.

6. System nach einem der Ansprüche 1 bis 5, **dadurch gekennzeichnet, dass** das Trägerorgan (80) einen U-förmigen Körper (79) umfasst, der einen Boden (78) und einander zugewandte Seitenflügel (77) aufweist, die zusammen eine Unterbringung (83) für das dünne Röhrchen (8) der Hülle (9) definieren, wobei die Unterbringung längs dem Boden gegenüberliegend mit einer Seitenöffnung (88) mündet, die konfiguriert ist, um das aufrecht ausgerichtete Röhrchen für dessen Einbringung in der Unterbringung aufzunehmen.

7. System nach einem der Ansprüche 1 bis 6, **dadurch gekennzeichnet, dass** das Trägerorgan (80) auf der Seite eines unteren Endes (85) mit mindestens einem Teil (91, 92) zum Einklemmendes dünnen Röhrchens (8), und auf der seinem unteren Ende gegenüberliegenden Seite eines oberen Endes (84) mit einem Haken (90) zum Halten des dünnen Röhrchens versehen ist.

8. System nach Anspruch 7, **dadurch gekennzeichnet, dass** das Trägerorgan (80) so konfiguriert ist, dass das dünne Röhrchen (8) in Position am Trägerorgan arretiert und mindestens teilweise längs zwischen dem mindestens einen Klemmteil (91, 92, 92A) und dem Haltehaken (90) gebogen wird.

9. System nach einem der Ansprüche 1 bis 8, **dadurch gekennzeichnet, dass** das System (1) einen Deckel (41) umfasst, der an einem Rand (44) des Behälters (10) angebracht ist und sich über der flüssigen Zone (17) hängend erstreckt, und das Trägerorgan (80) an dem und durch den Deckel hindurch beweglich angebracht ist.

10. System nach Anspruch 9, **dadurch gekennzeichnet, dass** der Deckel (41) in der gasförmigen Zone (18) des Bades (11) aus kryogenem Mittel positioniert ist.

11. System nach Anspruch 10, **dadurch gekennzeichnet, dass** der Behälter (10) mit einer isolierenden Außenwand (25) und mit einer dichten Innenwand (26) versehen ist, die mindestens teilweise einen Innenraum (22) zum Aufnehmen des Bades (11) aus kryogenem Mittel begrenzt, wobei die isolierende Außenwand eine innere Schulter (27) aufweist, die an der Oberseite des Behälters ausgestaltet ist, wobei die dichte Innenwand eine äußere Erstreckung (28) aufweist, die an der Oberseite des Behälters ausgestaltet ist und auf der Schulter der Außenwand aufliegend angeordnet ist, wobei die äußere Erstreckung den Rand des Behälters bildet, auf dem der Deckel positioniert ist.

12. System nach einem der Ansprüche 1 bis 11, **dadurch gekennzeichnet, dass** es einen Becher (60) mit mehreren Fächern umfasst, der konfiguriert ist, um eine Vielzahl der Verpackungshüllen (9) zu transportieren, einen Aufnahmeträger (57), der mindestens teilweise in dem Behälter (10) untergebracht und konfiguriert ist, um in herausnehmbarer Art und Weise den Becher mit mehreren Fächern so aufzunehmen, dass mindestens die Aufnahmeregion (12) des dünnen Röhrchens (8) jeder der Vielzahl der Verpackungshüllen in die flüssige Zone (17) des Bades (11) aus kryogenem Mittel getaucht ist.

13. System nach Anspruch 12, **dadurch gekennzeichnet, dass** der Aufnahmeträger (57) des Bechers (60) mit mehreren Fächern drehbeweglich ist zwischen einer Lagerungsposition, in der sich der Becher mit mehreren Fächern im Wesentlichen in der Vertikalen befindet, und einer Lade-/Entladeposition, in der der Becher mit mehreren Fächern geneigt und mindestens teilweise in die flüssige Zone (17) des Bades (11) aus kryogenem Mittel getaucht ist; wodurch das System (1) konfiguriert ist, um eine Verpackungshülle (9), die auf Höhe jedes von ihrem ersten und ihrem zweiten Ende (13; 15) verschlossen ist, mindestens von dem Trägerorgan (80) zu dem Becher mit mehreren Fächern gelangen zu lassen, während sie zum größten Teil in das Bad aus kryogenem Mittel getaucht bleibt.

14. System nach einem der Ansprüche 12 und 13, **dadurch gekennzeichnet, dass** es eine Öffnungsvorrichtung (64) umfasst, die konfiguriert ist, um das dünne Röhrchen (8) der Verpackungshülle (9) auf Höhe von einem aus dem ersten und dem zweiten Ende (13; 15) abzuschneiden, und am Behälter (10) in der Nähe des Bechers (60) mit mehreren Fächern angebracht ist.

15. System nach Anspruch 14, **dadurch gekennzeichnet, dass** es ein Gestell (68) umfasst, das am Behälter (10) in der Nähe der Öffnungsvorrichtung (64) angebracht ist und eine Vielzahl von Kerben (69) aufweist, die jeweils konfiguriert sind, um ein dünnes Röhrchen (8) einer Verpackungshülle (9), das auf Höhe von einem seines ersten und seines zweiten Endes (13; 15) geöffnet ist, in einer aufrechten Position zu halten, wobei das Gestell so konfiguriert ist, dass die Aufnahmeregion (12) des dünnen Röhrchens in die flüssige Zone (17) des Bades (11) aus kryogenem Mittel getaucht ist.

16. System nach einem der Ansprüche 1 bis 15, **dadurch gekennzeichnet, dass** es eine Vorrichtung (70) zum Steuern der Höhe der flüssigen Zone (17) des Bades (11) aus kryogenem Mittel in dem Behälter (10) umfasst.

17. Verfahren zur Vitrifikation einer Substanz, die biologisches Material umfasst, das konserviert werden soll, wie etwa ein Embryo oder eine Eizelle, mit Hilfe des Systems (1) nach einem der Ansprüche 1 bis 16, die folgenden Schritte umfassend:
- Bereitstellen eines Verpackungssets für die Substanz, das eine Verpackungshülle (9) mit einem dünnen Röhrchen (8) mit vorbestimmten Abmessungen, das an einem ersten Ende (13) eine Öffnung (14) aufweist und in der Nähe eines dem ersten Ende gegenüberliegenden zweiten Endes (15) verschlossen ist, und einen Aufnahmeträger (7) umfasst, der konfiguriert ist, um ein vorbestimmtes Volumen der Substanz aufzunehmen und um in das Innere des dünnen Röhrchens eingebracht zu werden, sodass das vorbestimmte Volumen der Substanz sich in einer Aufnahmeregion (12) des dünnen Röhrchens befindet, welche sich in Entfernung von der Öffnung des dünnen Röhrchens befindet;
- Bereitstellen des Behälters (10), der ein Bad (11) aus einem kryogenen Mittel enthält;
- Bereitstellen des mindestens einen Trägerorgans (80), das konfiguriert ist, um an dem Behälter angebracht zu werden und um das dünne Röhrchen in einer vorbestimmten Ausrichtung zu halten;
- Anordnen des dünnen Röhrchens in dem Trägerorgan in der vorbestimmten Ausrichtung;
- Anbringen des Trägerorgans an dem Behälter in der mindestens einen zweiten vorbestimmten Position, in der das dünne Röhrchen aufrecht in dem Behälter ausgerichtet ist, wobei die Aufnahmeregion des dünnen Röhrchens in eine flüssige Zone (17) des Bades aus kryogenem Mittel, in der sich das kryogene Mittel im flüssigen Zustand befindet, getaucht wird, und wobei die Öffnung des dünnen Röhrchens sich unmittelbar über der flüssigen Zone in einer gasförmigen Zone (18) des Bades aus kryogenem Mittel, die über der flüssigen Zone liegt und in der sich das kryogene Mittel im gasförmigen Zustand befindet, und unter einer Umgebungsluftzone (82) befindet, die über dem Bad aus kryogenem Mittel liegt;
- Heben des Trägerorgans aus der zweiten vorbestimmten Position in die erste vorbestimmte Position, die höher ist als die zweite vorbestimmte Position, wobei das dünne Röhrchen aufrecht in dem Behälter ausgerichtet ist, wobei die Aufnahmeregion des dünnen Röhrchens in die flüssige Zone des Bades aus kryogenem Mittel getaucht ist, und die Öffnung des dünnen Röhrchens sich über dem Bad aus kryogenem Mittel in einer Umgebungsluftzone befindet, die über dem Bad aus kryogenem Mittel liegt, um das Einbringen des Aufnahmeträgers der Substanz in das dünne Röhrchen zu ermöglichen;
- Ablagern der Substanz an dem Träger und Einbringen des Trägers in das dünne Röhrchen; und
- Versiegeln des dünnen Röhrchens auf Höhe seines zweiten Endes.

## Claims

1. A system for cryogenic vitrification of a substance, said substance comprising biological material to preserve, such as an embryo or an oocyte, and received in a packaging casing (9), said casing comprising a thin tube (8) of predetermined dimensions having an opening (14) at a first end (13) and being closed off in the neighborhood of a second end (15) which is an opposite end to said first end (13), said casing (9) forming part of a packaging set for said substance comprising, in addition to said casing (9), a receiving carrier (7) configured to receive a predetermined volume of said substance and to be inserted inside said thin tube (8) such that said predetermined volume of said substance is located in a receiving region (12) of said thin tube (8) located at a distance from said opening (14) of said thin tube (8);
said system (1) comprising a tub (10) configured to contain a bath (11) of a cryogenic agent and at least one carrier member (80) configured to hold said thin tube (8) in a predetermined orientation and to be mounted on said tub (10) in a first predetermined position in which said thin tube (8) is uprightly oriented in said tub (10), said receiving region (12) of said thin tube (8) is immersed in a liquid zone (17) of said bath (11) of cryogenic agent where said cryogenic agent is in the liquid state, and said opening (14) of said thin tube (8) is located above said bath (11) of cryogenic agent, in a zone of ambient air (82) surmounting said bath (11) of cryogenic agent, to enable the insertion of said receiving carrier (7) of said substance into said thin tube (8);
said system being **characterized in that** said carrier member (80) is configured to be mounted on said tub (10) in at least one second predetermined position, lower than said first predetermined position, in which second predetermined position said thin tube (8) is uprightly oriented in said tub (10), said receiving region (12) of said thin tube (8) is immersed in said liquid zone (17), and said opening (14) of said thin tube (8) is located immediately above said liquid zone (17), in a gaseous zone (18) of said bath (11) of cryogenic agent, surmounting said liquid zone (17) and where said cryogenic agent is in the gaseous state, and below said ambient air zone (82) surmounting said bath (11) of cryogenic agent, and to be raised from said second predetermined position to said first predetermined position.

2. A system according to claim 1, **characterized in that** it comprises at least one guide rail (81) mechanically connected to said tub (10), said carrier member (80) being mounted to be movable on said guide rail in a substantially vertical direction to pass from said second predetermined position to said first predetermined position, and vice-versa.

3. A system according to claim 2, **characterized in that** said carrier member (80) comprises at least one positioning projection (93) and said guide rail (81) comprises a first positioning cut-out (113) and a second positioning cut-out (114) each configured to receive said at least one first projection and which respectively define said first predetermined position and said second predetermined position;

4. A system according to one of claims 2 or 3, **characterized in that** said carrier member (80) is slidingly mounted on said guide rail (81).

5. A system according to claim 4, **characterized in that** said carrier member (80) comprises at least one guide projection (94) and said guide rail (81) comprises at least one guide cut-out (109) extending substantially vertically and at least partly along said guide rail and being configured to slidingly receive said at least one guide projection, when said carrier member is moved from its second predetermined position to its first predetermined position;

6. A system according to any one of claims 1 to 5, **characterized in that** the carrier member (80) comprises a U-shaped body (79) that has a back (78) and facing lateral flanges (77) together defining a housing (83) for said thin tube (8) and said casing (9), which housing is open longitudinally opposite said back through a lateral opening (88) configured to receive said tube uprightly oriented for its insertion into said housing.

7. A system according to any one of claims 1 to 6, **characterized in that** said carrier member (80) is provided, towards a lower end (85), with at least one part (91, 92) for wedging said thin tube (8) and, towards an upper end (84) which is an opposite end to its lower end, with a hook (90) for retaining said thin tube.

8. A system according to claim 7, **characterized in that** said carrier member (80) is configured such that said thin tube (8) is confined in position on said carrier member and at least partly bent longitudinally between said at least one wedging part (91, 92, 92A) and said retaining hook (90).

9. A system according to any one of claims 1 to 8, **characterized in that** said system (1) comprises a cover (41) mounted on a rim (44) of said tub (10) and extending to be situated over said liquid zone (17), and said carrier member (80) is moveably mounted on and through said cover.

10. A system according to claim 9, **characterized in that** said cover (41) is positioned in said gaseous zone (18) of said bath (11) of cryogenic agent.

11. A system according to claim 10, **characterized in that** said tub (10) is provided with an insulating external wall (25) and with a fluid-tight internal wall (26) delimiting at least partly an internal receiving space (22) for the bath (11) of cryogenic agent, said insulating external wall having an internal shoulder (27) provided at the top of said tub, said fluid-tight internal wall having an external extension (28) provided at the top of said tub and disposed bearing on said shoulder of said external wall, said external extension forming said rim of said tub on which is positioned said cover.

12. A system according to any one of claims 1 to 11, **characterized in that** it comprises a multi-compartment goblet (60) configured to transport a plurality of said packaging casings (9), a receiving carrier (57) at least partly housed in said tub (10) and configured to removably receive said multi-compartment goblet such that at least the receiving region (12) of the thin tube (8) of each of said plurality of said packaging casings is immersed in said liquid zone (17) of said bath (11) of cryogenic agent.

13. A system according to claim 12, **characterized in that** said receiving carrier (57) of said multi-compartment goblet (60) is rotatable between a storage position in which said multi-compartment goblet is situated substantially vertically and a filling/emptying position in which said multi-compartment goblet is inclined and at least partly immersed in said liquid zone (17) of said bath (11) of cryogenic agent; whereby said system (1) is configured to pass a said packaging casing (9) that is closed off at each of its first and second ends (13; 15) at least from said carrier member (80) to said multi-compartment goblet while remaining mostly immersed in said bath of cryogenic agent.

14. A system according to one of claims 12 and 13, **characterized in that** it comprises an opening device (64) which is configured to cut said thin tube (8) of said packaging casing (9), at one of said first and second ends (13 ; 15), and which is mounted on said tub (10) near said multi-compartment goblet (60).

15. A system according to claim 14, **characterized in that** it comprises a rack (68) mounted on said tub (10) near said opening device (64) and which has a plurality of cut-outs (69) each configured to hold, in an upright position, a thin tube (8) of a said packaging casing (9), which is open at one of said first and second ends (13 ; 15), said rack being configured such that the receiving region (12) of said thin tube is immersed in the liquid zone (17) of said bath (11) of cryogenic agent.

16. A system according to any one of claims 1 to 15, **characterized in that** it comprises a checking device (70) for the level of said liquid zone (17) of said bath (11) of cryogenic agent in said tub (10).

17. A method of vitrifying a substance comprising biological material to preserve, such as an embryo or an oocyte, using the system (1) according to any one of claims 1 to 16, comprising the steps of:
- providing a packaging set for said substance comprising a packaging casing (9) having a thin tube (8) of predetermined dimensions having an opening (14) at a first end (13) and being closed off in the neighborhood of a second end (15) that is an opposite end to said first end, and a receiving carrier (7) configured to receive a predetermined volume of said substance and to be inserted inside said thin tube such that said predetermined volume of said substance is located in a receiving region (12) of said thin tube located at a distance from said opening of said thin tube;
- providing said tub (10) containing a bath (11) of cryogenic agent;
- providing said at least one carrier member (80) configured to be mounted on said tub and to hold said thin tube in a predetermined orientation;
- placing said thin tube in said carrier member in said predetermined orientation;
- mounting said carrier member on said tub in said at least one second predetermined position in which said thin tube is uprightly oriented in said tub, said receiving region of said thin tube being immersed in a liquid zone (17) of said bath of cryogenic agent in which the cryogenic agent is in the liquid state, and said opening of said thin tube being located immediately above said liquid zone, in a gaseous zone (18) of said bath of cryogenic agent, surmounting said liquid zone and where said cryogenic agent is in the gaseous state, and below an ambient air zone (82) surmounting said bath of cryogenic agent;
- raising said carrier member from said second predetermined position to said first predetermined position, higher than said second predetermined position, in which said thin tube is uprightly oriented in said tub, said receiving region of said thin tube being immersed in said liquid zone of said bath of cryogenic agent, and said opening of said thin tube being located above said bath of cryogenic agent, in an ambient air zone surmounting said bath of cryogenic agent, to enable the insertion of said receiving carrier of said substance into said thin tube;
- depositing said substance on said carrier and inserting said carrier into said thin tube; and
- sealing said thin tube at its second end.
